# EUROPEAN PATENT SPECIFICATION

(11) **EP 4 405 239 B1**
(45) Date of publication and mention of the grant of the patent: **04.03.2026**
(21) Application number: 22786066.5
(22) Date of filing: 20.09.2022
(51) Int. Cl.: B62K 11/00

(54) **A COMPACT GROUND VEHICLE WITH ELECTRIC PROPULSION**
EIN KOMPAKTES STRASSENFAHRZEUG MIT ELEKTRISCHEN ANTRIEB
UN VÉHICULE COMPACTE AVEC PROPULSION ÉLECTRIQUE

(30) Priority: 20.09.2021 GB 202113407
(43) Date of publication of application: 31.07.2024
(73) Proprietor: VO Vehicles Ltd, London, Greater London SW11 5BG (GB)
(72) Inventor: BAILEY, Marianne, London Greater London SW11 5BG (GB)
(74) Representative: Kemp, Paul Geoffrey
(86) International application number: PCT/GB2022/052373
(87) International publication number: WO 2023/041942

(56) References cited:
- WO-A1-2018/041148
- WO-A2-2017/119805
- CN-A- 1 634 745
- CN-A- 112 590 990
- FR-A1- 3 037 314
- US-A1- 2017 073 039

## Description

### Technical field

*.* The present invention concerns a biwheel ground vehicle with electric propulsion for transporting cargo up to the size of several suitcases and a small numbers of passengers (1 to 4). For the purpose of this specification at least a biwheel vehicle has a pair of large spaced main wheels each of which rotates around a single common axis. The vehicle may be provided with additional stabilising jockey wheels. A payload is suspended above the ground and between the main wheels. The payload may be a driver, passenger or some combination of the two with cargo up to a largest size suitcase of 77cm x 50cm x 27cm normally allowed as passenger aircraft luggage together with space for 2 x passenger aircraft carry on cabin luggage under the seats of 56cm x 40cm x 25cm.

### Background Art

*.* The closest known prior art is exemplified by the diwheel as shown in FR3037314A1 and WO2018/041148A1. The diwheel comprises two large spaced wheels arranged for rotation on a common axis. A chassis is suspended between the wheels and supports a cockpit for human and/or a cargo payload. A mechanism is arranged to apply torque to the axis of each wheel in equal amounts in order to propel the vehicle parallel to the ground and substantially perpendicular to the wheel rotation axis. The mechanism may be a motor or a mechanical drive from manually operated pedals. To steer the diwheel an unequal torque is applied to each wheel so that one wheel accelerates around an arc on the ground. In some cases one wheel may be braked or the torque relatively reversed to achieve the steering effect. The application of a torque to the wheels of course applies an equal and opposite torque to the cockpit causing the cockpit to pitch up in the opposite rotary sense which is disconcerting for any driver or passenger. In the case of manually powered diwheels it is extremely difficult to apply torque smoothly and uniformly so that the uneven application of torque causes the cockpit to swing back and forth and in extreme cases to rotate completely (360°) around the wheel axis. This action is known as gerbiling (as it resembles a gerbil running in a wheel) and in any practical application of the vehicle is undesirable. Conventional mechanisms to overcome this involve applying torque to the wheels via an electric motor, the motor being controlled via a controller arranged to minimize gerbiling.

*.* The known wheels are conventionally fabricated from a hub supporting circular rims via spokes under tension. Drive to the wheels is via a single motor applying torque to the wheel axle. This creates a problem of access to the cockpit which has conventionally been via a passageway or hatch in the front or preferably the rear of the vehicle. The provision of a front entrance is hindered by any control systems such as steering means. Entrance to the vehicle is inevitably a somewhat impractical gymnastic manoeuvre, and the space required for the access and exit passage minimises the usable cockpit space. As a result a diwheel is either limited to single occupancy or becomes unduly wide and the provision of practical luggage space is impossible.

*.* Wheels require tyres in order to enhance road traction. Conventionally pneumatic tyres also provide a degree of suspension. The provision of suspension to enhance passenger comfort, ride, steering directionality and traction is also an issue. However pneumatic tyres are vulnerable to punctures and present particular difficulties when mounting on to such very large rims as is required for any diwheel like vehicle. These difficulties are exacerbated if a roadside puncture repair is required.

. There is a demand for a compact low carbon emission vehicle capable of passenger carrying and carrying luggage, providing a degree of weather protection and collision protection and which occupies minimal road space during use and when parked.

### Summary of invention

*.* According to a first aspect of the present invention there is provided a biwheel having: a pair of spaced ground engageable main wheels disposed relatively parallel to each other to suspend a cockpit between them, said cockpit capable of accommodating a payload, a power transmission arranged to apply torque to each wheel to propel the biwheel over the ground; each wheel is supported at and torque is applied to each wheel solely at its rim, thereby obviating any rim support extending between the axis and the rim so that access to the cockpit can readily be achieved through the space inside the wheel rim; each main wheel is supported by a plurality of suspension assemblies disposed spaced around the circumference of each main wheel to act between the inside of a rim of the wheel and the cockpit; each suspension assembly comprises a spring supporting at least one of an idler wheel or a drive wheel to absorb a shock applied to the main wheel via motion between the main wheel and cockpit characterised in that the spring is a leaf spring.

*.* Preferably each wheel is supported on the chassis by a combination of idler wheels and drive wheels circumferentially spaced around the rim. Preferably the idler wheels and drive wheels engage the radial inside of the rim. The wheel may be supported by at least two idler wheels and one drive wheel although a preferred embodiment may use more idler wheels, for example five (three to five) idler wheels and a single drive wheel. More than one drive wheel may be used to enhance traction between the drive wheels and the main wheel and reduce maintenance by reducing the wear rate of each drive wheel.

*.* Each idler wheel and drive wheel supports the cockpit via a suspension assembly which allows sprung and damped relative movement between the main wheels and the cockpit. The suspension is provided by a leaf spring. The leaf spring may be supported as a cantilever with one end secured to the cockpit and the other supporting the drive wheel or idler wheel. The leaf spring may also be mounted medially to the cockpit and either or each of an idler wheel and drive wheel mounted to each end to engage the inside of the main wheel rim. The leaf spring is preferably arcuate when installed and at rest. The suspension is arranged so that at rest on a horizontal surface the cockpit rests concentrically with respect to each main wheel axis. Preferably each main wheel is cambered, that is to say is suspended so that, at rest on a horizontal surface, the axis of each main wheel is inclined down whereby the distance between the apex of each main wheel is less than the distance between the nadir of each main wheel. Preferably the inclination of each axis, measured normal to the horizontal ground surface is less than 90°, preferably between 89.5° and 85° and more preferably between 89° and 88° and most preferably 88.5. In the rest state each main wheel axis intersects on a central plane bisecting the biwheel from front to back. The camber mechanically stops gerbilling.

*.* Preferably each idler wheel and drive wheel suspension assembly is disposed to maximally space the suspension assembly from the ground in order to minimise fouling. The drive idler wheel assemblies are also disposed to bring the centre of gravity of the cockpit close to the ground. Bringing the vehicle centre of gravity close to the ground is desirable to minimise any risk of vehicle toppling, for example when turning at speed. To optimise these conflicting requirements it is preferred to have a greater number of idler drive wheel assemblies below the wheel axis than the number above the wheel axis. It is preferred to have each drive wheel assembly below the wheel axis because drive wheel assemblies are heavier than the idler wheel assemblies.

*.* Each wheel is preferably formed from a single tube formed into a circle. The tube is worked to be convex on the radially inner surface and concave on the outer surface. A solid tyre of a polymer material is applied by moulding directly onto to the concave outer surface. The polyurethane tyre can be moulded directly on to the metal rim or bonded polyurethane extrusion.

*.* Preferably a rear jockey wheel is deployed from the rear of the cockpit to normally engage the ground and provide tricycle stability by preventing the biwheel from pitching backwards with heavy loads such as suitcase cargo. The rear jockey wheel is preferably sized to fit within the length of the vehicle that is equivalent to the diameter, of the main wheel. This means the diameter of the rear jockey wheel is between 1/6 and 1/10 the diameter of the main wheel and preferably 1/8 the diameter of the main wheel.

*.* Propulsion may be solely by means of a motor; particularly an electric motor and more preferably by means of two electric motors coupled one each to each wheel. Preferably the electric motors are independently driven from an accumulator system to deliver torque in accordance with the output of a controller in response to either one of an autopilot or a manual control such as a joystick. Torque may be controlled to alter the direction of travel by running the wheels at different speeds. The controller may be further responsive to sensors which detect relative motion of the cockpit, such as accelerometers to stabilise the attitude of the cockpit.

*.* In a preferred embodiment the biwheel is an electric manual hybrid with the propulsion coming from a combination of a manually actuated source such as a treadle or pedal assisted by one or more electric motors. Preferably the cockpit contains at least one seat to support a driver. Preferably a second seat may be provided substantially adjacent the nominal driver's seat for a passenger. A driver treadle mechanism using two pedals is supported within the cockpit disposed to be presented to the feet of the driver. Significantly the treadle mechanism transfers the oscillating linear motion of the pedals propelled by the driver to a rotary motion at a crank arm which is sited beneath the pedals. The crank arm is coupled to a driver side drive shaft which spans the space in the cockpit in front of and beneath the feet and legs of the driver to convey torque to a centrally mounted rotary drive. The drive shaft couples to the drive ring via a freewheel. A passenger treadle mechanism mirrors the driver treadle mechanism on the passenger side and couple to the drive ring via a freewheel so the passenger and driver pedals are not coupled and work independently. The rotary drive is coupled via a transmission to each main wheel. Preferably the rotary drive is provided by a belt ring which transfers torque via an endless belt to a final drive mechanism. The final drive mechanism preferably includes a differential coupling to each of two half shaft assemblies which are in turn coupled, one each, to each drive wheel of each main wheel. Preferably the half shaft assemblies incorporate extendable universal joints to accommodate the relative movements of the wheel and cockpit. Thus application of thrust to any pedal applies torque to each main wheel in equal amounts. A hub gear box may be provided to provide a range of gears operative between the drive ring and the differential. Preferably the gears are selected automatically.

*.* The torque applied to the wheels from the manual propulsion system may be assisted by torque applied from one or more electric motor. Preferably two electric motors are provided associated one each with each half shaft. Preferably each electric motor is incorporated into each drive wheel and is able to draw power from the accumulator system. The accumulator system is preferably provided by one or more electrical batteries. The biwheel control system may include a CPU, and memory to control the delivery of torque assistance to each half shaft in accordance with a control algorithm. The algorithm drives the control system in response to a predetermined assistance level and signals from sensors sensitive to any or all of: the thrust applied to any pedal, the cadence of any pedal, ground speed, the main wheel speed, the attitude of the cockpit, ground inclination and road camber. The predetermined assistance level may be set by manual selection by the driver. By controlling the assistance level in response to the torque applied and the attitude of the cockpit the control system acts to stabilise the attitude of the cockpit whatever thrust is applied to the pedals. The motors may also be used for regenerative braking to recover charge to the accumulator system. Preferably the pedal assist is only actuated by the driver's pedals for safety.

. Brakes are provided to brake the drive wheels and hence the main wheels. Preferably the brakes are disc brakes mounted one each to each motor.

*.* Steering is preferably responsive to a manual control. The manual control is preferably a joystick. The manual control may be centrally mounted onto a central control console between the driver and passenger seats or on the drivers outside arm. Thus the vehicle may be controlled from either seat as desired for international use for either side of the road and the driver doesn't knock the joystick on entry. The control system is arranged to respond to movements of the joystick to asymmetrically apply torque or braking to each wheel in order to turn the biwheel to the left or right when underway. When stationary actuation of the joystick may drive the control system to apply opposite torques to the respective motors in order to turn the biwheel in its own length or to apply a reversing torque.

*.* The large size of the main wheels implies friction and inertia which is difficult to overcome when starting. Accordingly the control system in a hybrid manual electric biwheel may be responsive to sensors such as a speed sensor indicating that the biwheel is stationary by applying power assistance to the main wheels at start to assist the force applied at the pedals by the driver.

*.* By locating the joystick centrally either seat may serve as the driver seat with the adjacent seat serving as the passenger seat.

*.* The motors and brakes are controlled to be responsive to the movement of the pedals to move forward. A left turn is implemented when the joystick is moved to the left and a right turn when the joystick is moved right and reverse when a button is pressed on the joystick and then pulled back. The radius of turn is preferably proportional to the degree of movement of the joystick. When stationary and the joystick is tilted to the left the resulting spin command causes the vehicle to turn on the spot anticlockwise and when stationary and when the joystick is tilted to the right the vehicle turns on the spot clockwise. When turning on the spot the wheel speed may be limited through the controller. The controller may respond to the spin command to activate warning lights visible from outside the vehicle and a sound warning indicating turning.

*.* When underway the biwheel rests on the two main wheels and the rear jockey wheel. The wheel camber interacts with the stiff chassis and/or monocoque to discourage pitch movement and stop gerbiling.

*.* Gerbiling is further discouraged by an arrangement of biwheel cockpit mounted components including each seat, motor, and a majority of suspension assemblies to bring the centre of gravity to be neutral with no payload. This arrangement minimises the stabilising work required of each drive motor and the control system thus enhancing the overall energy efficiency of the biwheel.

*.* The biwheel is designed to have a centre of gravity so that it will not rock forward at all with normal passenger and/or driver movement as the passenger or driver sits up from or sits down on the seat.

*.* However, if someone pulls on the front of the vehicle to get in or if they fall forward in the vehicle the biwheel cockpit may rock forward. To mitigate this effect the biwheel preferably has a front jockey wheel operable from a ground engaging rest position when stationary to an elevated movement position when the vehicle is in motion. Movement of the front jockey wheel from the rest to the movement position is preferably achieved by means of a foot pedal disposed inside the cockpit and accessible by the driver. A parking brake may be provided in each of, or either one of the front or rear jockey wheels to prevent movement of the biwheel when stationary. A "hand brake" may be provided on the control console to actuate the parking brake.

*.* Each seat may be mounted to move from a use position to a loading position when unoccupied in order to access a load space behind the seat (in the "boot" area) and deposit or recover a load to the load space before returning the seat to the use position. The seat position may be adjusted to accommodate differently sized individuals to reach the pedals. A passenger can move the passenger seat relatively adjacently behind the driver seat for a perceived and actual increase in personal space.

*.* The cockpit may comprise a space frame fabricated from tubular elements to which the aforementioned components are attached. Conveniently any selection of: a front windscreen panel, rear windscreen panel, canopy panel, and floor moulding may be attached to the space frame to provide protection from the elements and improve the biwheel aerodynamics. The panels may be structural elements to stiffen the space frame as well as to provide protection from the elements and impacts. In a variant of the biwheel the panels are integrated into a monocoque which replaces the space frame.

*.* A variant of the biwheel may be provided without any or some of the weather proofing body panels or mouldings to reduce weight and may rely solely on a space frame fabricated from tubular elements to support the main wheels suspension, propulsion, seat and control systems.

*.* Preferably the canopy panel includes or supports a flexible solar panel array or solar cells embedded in resin directly on the composite moulded roof (canopy) to provide charging for the accumulator system.

*.* Preferably the accumulator system includes a removable rechargeable main battery pack, which can be removed and transported to be charged from a standard mains charging socket for charging from a mains supply. This system also facilitates replacement of a first discharged main battery with a substitute charged battery obviating the delay required to charge the battery. This system also has a secondary fixed auxiliary battery to capture charge from the solar panel when the removable battery is removed and together with the battery management and motor control system and provide guaranteed power to the power steering. The fixed auxiliary battery is mounted in a battery housing. Running lights, brake lights and direction indicator lights may be mounted directly against the front and rear windscreens and powered from the accumulator system.

*.* According to a second aspect of the present invention there is provided a biwheel comprising a pair of spaced main wheels supported on a payload carrying chassis (or monocoque) for rotation, each main wheel rotating about a different intersecting axis, and wherein each axis lies in a common plane so that the nadir of each wheel where it contacts the ground is spaced relatively further apart than the apex.

*.* The second aspect of the invention may be combined with the previously described features in a manner which will be readily apparent to the skilled person.

*.* According to a third aspect of the present invention there is provided a treadle propelled vehicle comprising a seat or saddle to accommodate a human, a left pedal and a right pedal disposed to be pressed by the human's feet, each said pedal arranged to actuate a treadle mechanism comprising a crank arm arranged to reciprocally rotate around a common bearing axis, a draw arm pivotally attached to the crank arm between the pedal and the common bearing axis, said crank arm linking the crank arm to a rotor arm, said rotor arm coupled to a rotate with a drive shaft, whereby applying a thrust to the pedal causes the rotor arm and drive shaft to rotate.

*.* Preferably the left treadle mechanism and right treadle mechanism are arranged out of phase. More preferably the phase angle between the left and right treadle mechanism is not 0° degrees and not 180°.

*.* The treadle mechanism may be arranged to deliver torque to the transmission in a bicycle, tricycle (three ground engaging wheels) or quadricycle (four ground engaging wheels). In any embodiment of the biwheel the side entrance opening may be covered by an openable door panel to further enhance protection of the occupants from the elements.

*.* The door panel may be a structure that fixes to the chassis ring or monocoque or may be a flexible transparent fabric panel fastened to the inside of the cockpit structure to be readily rolled out of the way of the side entrance.

### Brief description of drawings

. An embodiment of a biwheel constructed in accordance with the present invention will now be described, by way of example only, with reference to the accompanying figures; in which,
Figure 1 is a NW isometric view;
Figure 2 is a SW isometric view;

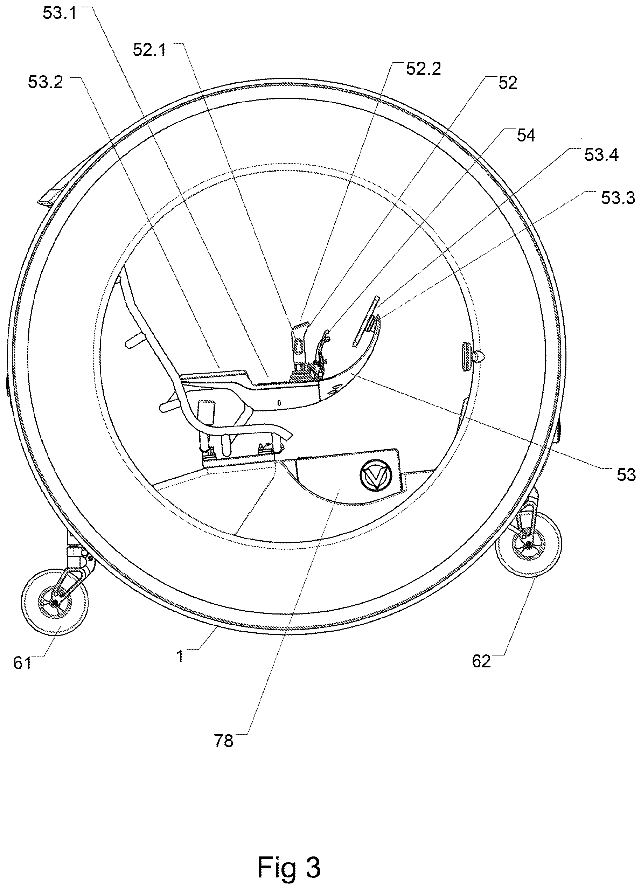

Figure 3 is a right side elevation;

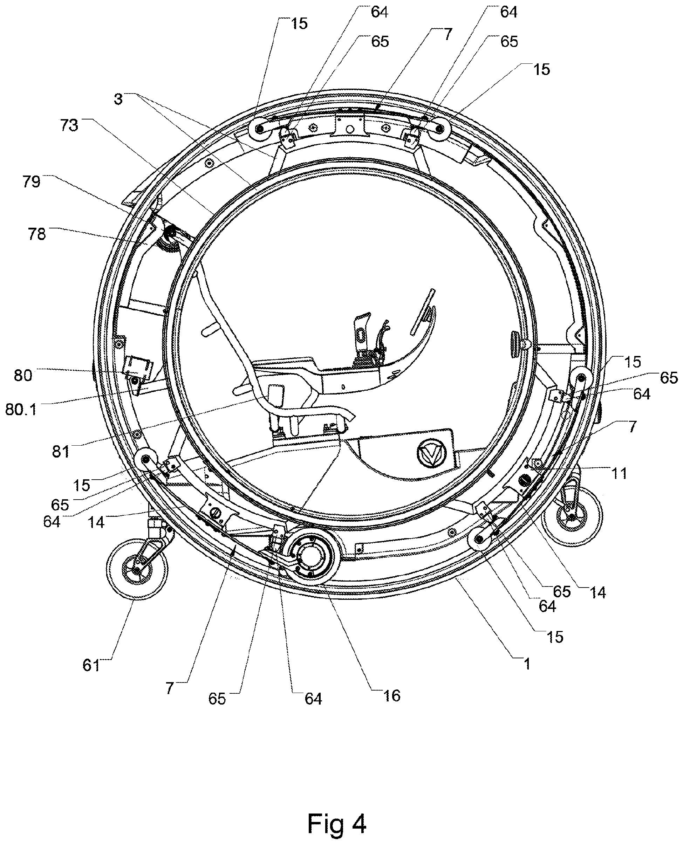

Figure 4 is a right side elevation with a ring fairing removed to show the suspension assemblies;

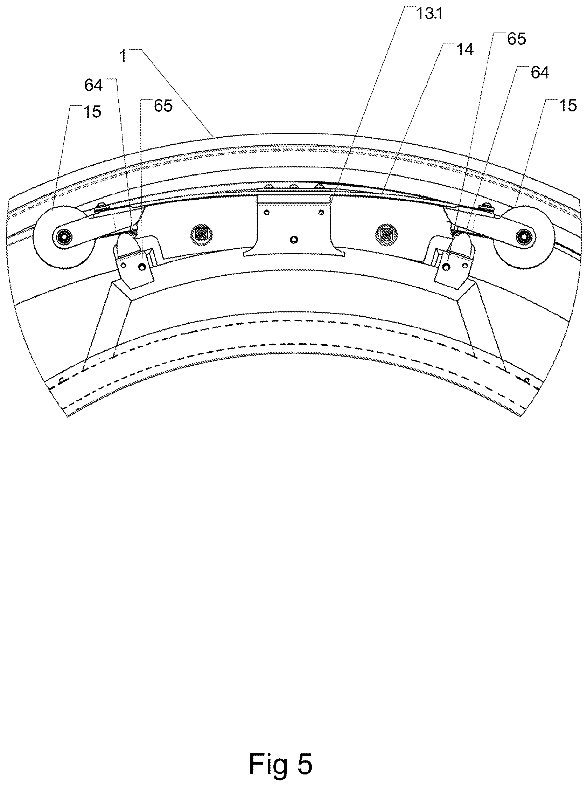

Figure 5 is an enlarged right elevation detail of a top suspension assembly;

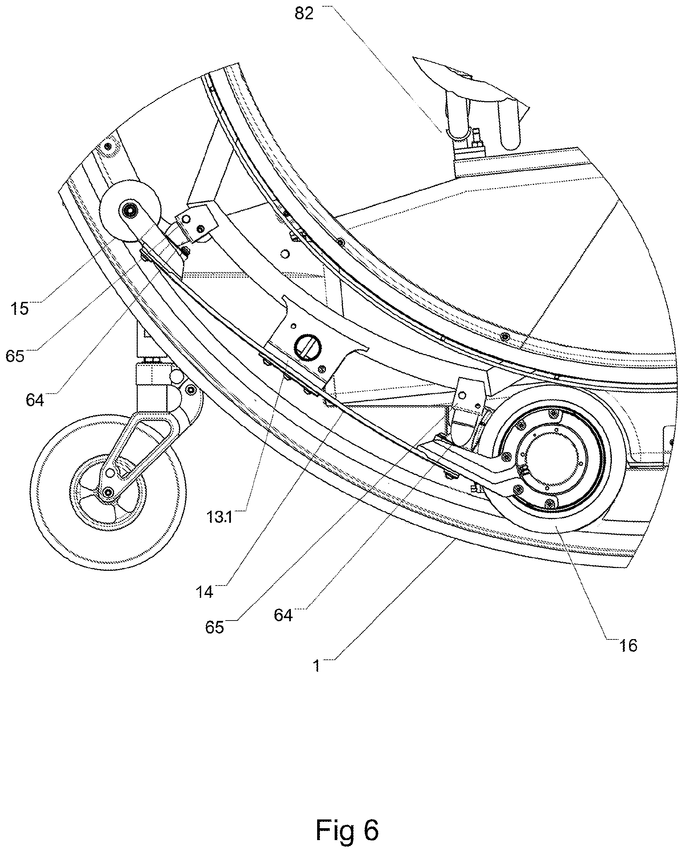

Figure 6 is an enlarged right elevation detail of drive wheel suspension assembly;
Figure 7 is a SW isometric cutaway view of the drive motor and disc brake assembly;
Figure 8 is a front elevation of the biwheel showing the positions of a front jockey wheel camber and axis left and axis right;
Figure 9 is a rear elevation of the biwheel;

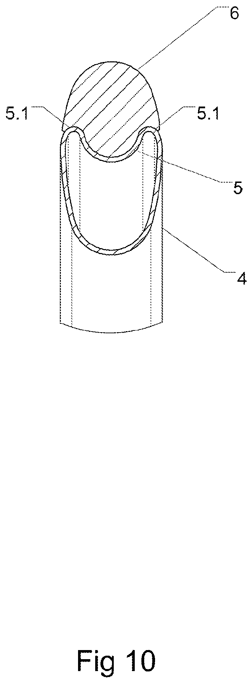

Figure 10 is an enlarged section through a rim and tyre of a main wheel;

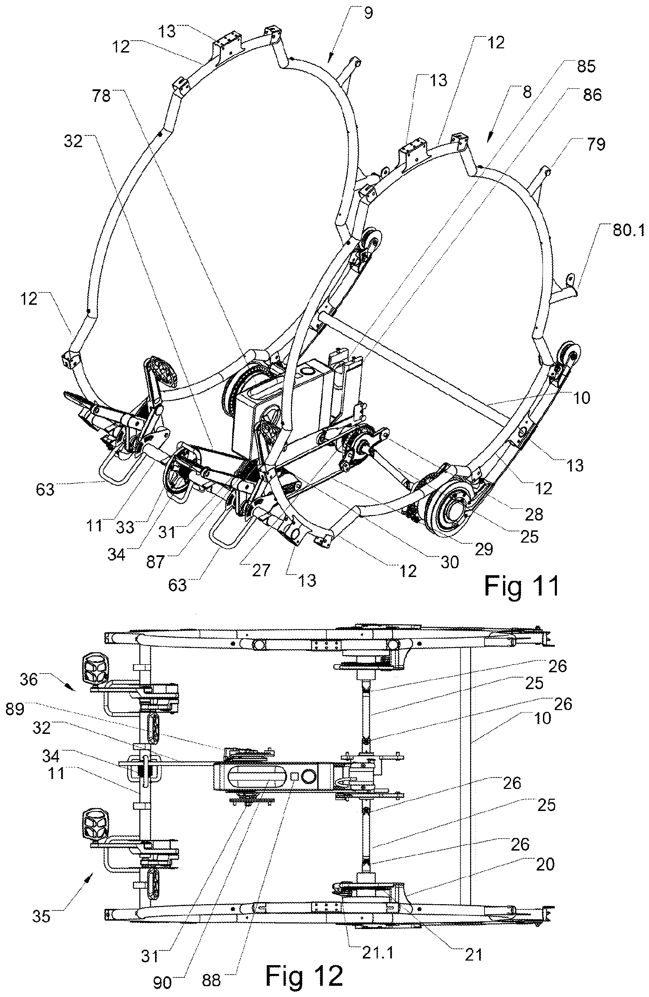

Figure 11 is a NW isometric view of elements of a cockpit space frame and drive train;
Figure 12 is a plan view of the cockpit space frame and drive train;

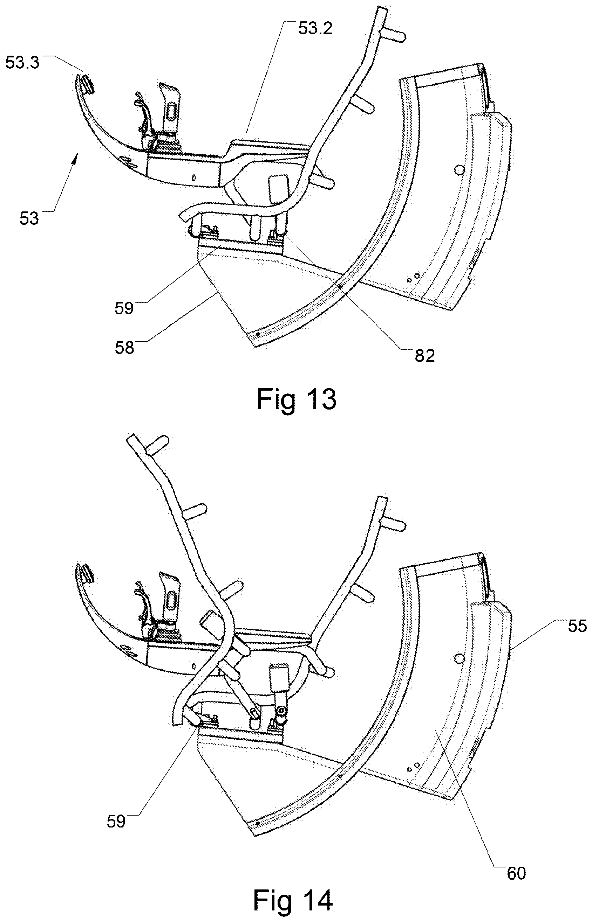

Figure 13 is a left side elevation of a seat in a driving position;
Figure 14 is left side elevation of a seat in a load space access position;

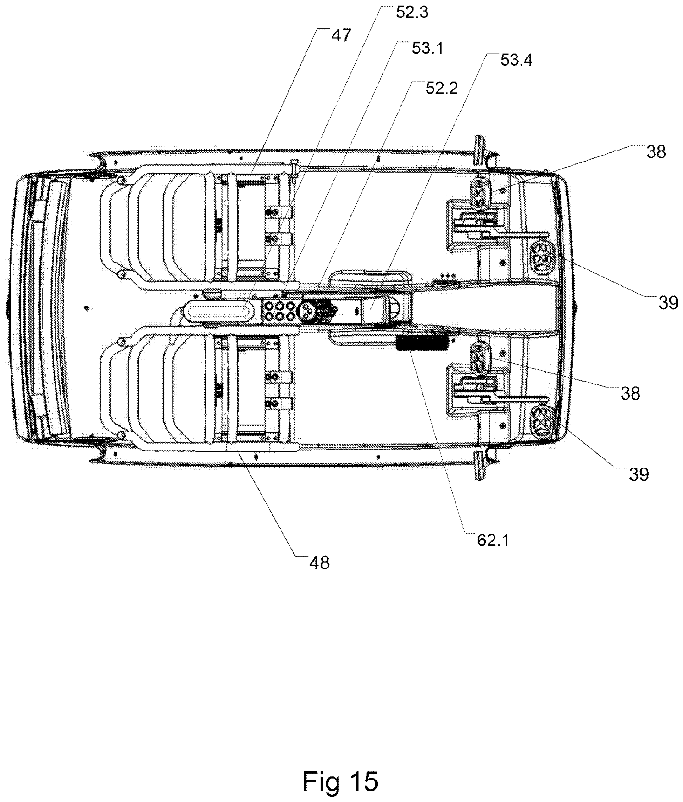

Figure 15 is a plan view with the canopy and each windscreen chassis rings, suspension assembly and rims removed:

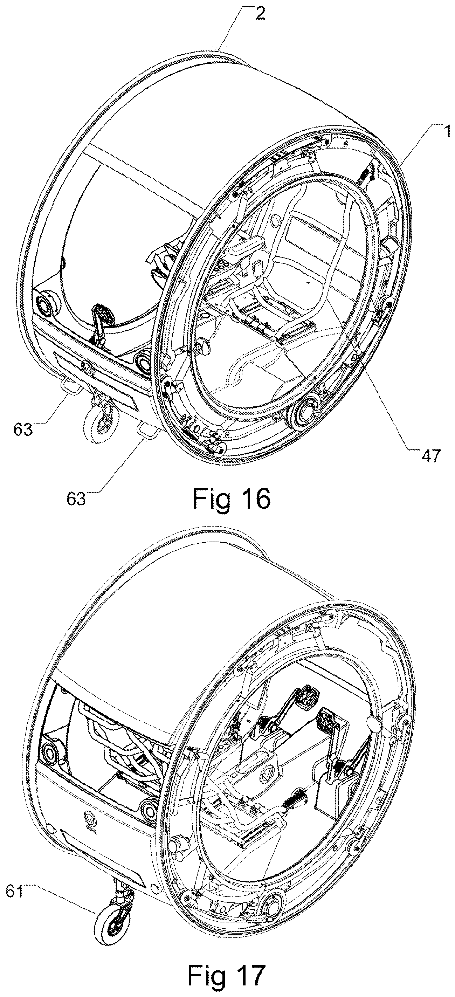

Figure 16 is a NW isometric view with a ring fairing removed;
Figure 17 is a SW isometric view with a ring fairing removed;
Figures 18.1-18.6 diagrammatically show the operative positions of a treadle mechanism through a cycle;
Figure 19 is a NW isometric view of a second embodiment of the biwheel;
Figure 20 is a NW isometric view of a third embodiment;
Figure 21 is a SW isometric view of the third embodiment
Figure 22 is a perspective view of a rear jockey wheel sub assembly;
Figure 23 is a perspective view of a front jockey wheel sub assembly
Figure 24 is a side elevation of the biwheel showing the installation of the jockey wheels and the front jockey wheel in raised and lowered position;

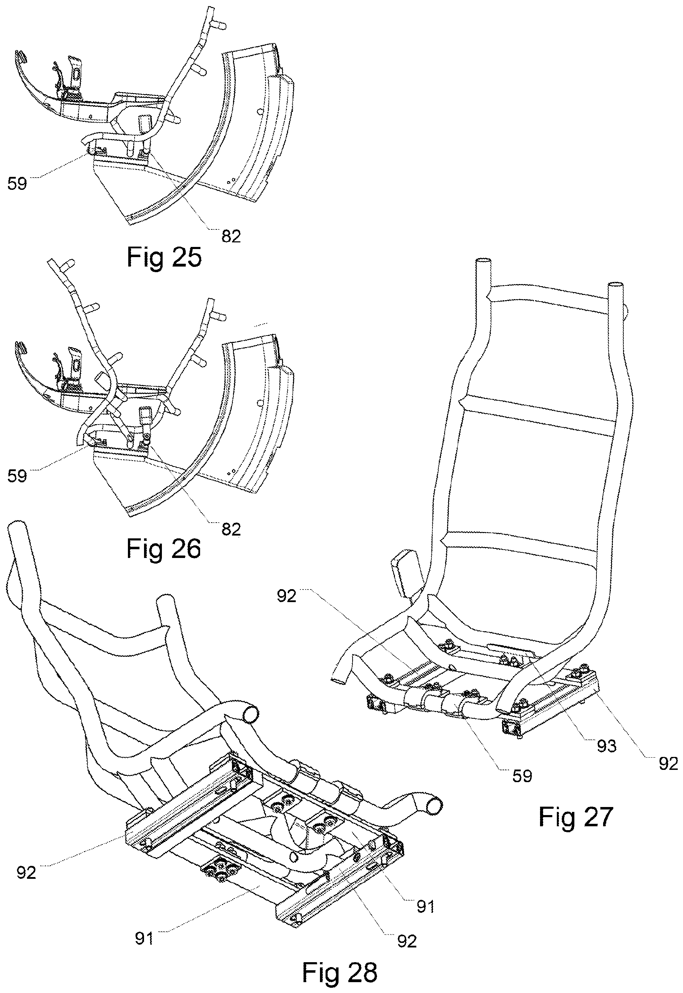

Figure 25 is a side elevation of a seat sub assembly in a seating condition;
Figure 26 is a side elevation of the seat sub assembly of figure 25 rotated to a luggage access condition;
Figure 27 is a perspective view from above and one side of the seat sub assembly;
Figure 28 is a perspective view of the seat sub assembly from below and one side;
Figure 29 is a plan view schematic of a bicycle fitted with treadle mechanism pedal assist drivetrain;
Figure 30 is a plan view schematic of a tricycle fitted with treadle mechanism pedal assist drivetrain;
Figure 31 a schematic of a quadricycle fitted with treadle mechanism pedal assist drivetrain;
Figure 32 is a perspective view of the treadle mechanism sub assembly configure for a quadricycle; and
Figure 33 is a perspective view of a mounting mechanism for a front jockey wheel assembly.

### Detailed description

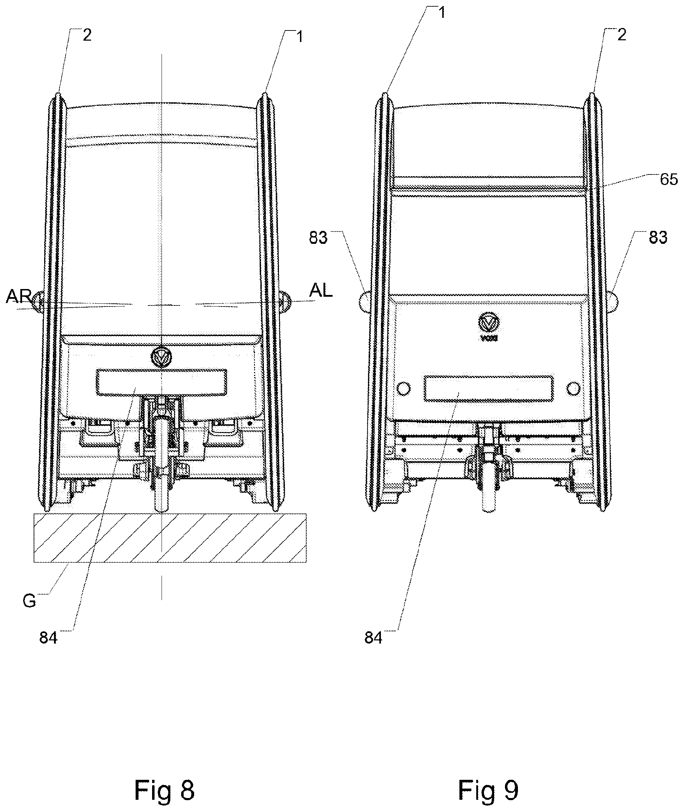

*.* The biwheel shown has a left main wheel 1 and right main wheel 2. Each wheel is supported by suspension assemblies 7 onto a cockpit structure 3 to rotate about respectively left axis AL and right axis AR. As can best be seen in figure 8 the when the nadir of each main wheel rests on ground G the axis AL and AR are inclined to the ground at angles of -88.5°and minus +88.5°respectively.

*.* Each wheel 1,2 comprises a tube 4 fabricated from high strength steel. The tube is initially circular in section but during fabrication is pressed between rollers to ovalize. The ovalized tube is then further rolled to form a concave 5. This cross section is then rolled into a circular wheel rim with the convex surface facing the axis and the concave surface facing away from the axis, the concave surface is necessarily bounded by convex section rim features which extend around to join the convex surface. A solid polymer is then moulded on to the wheel rim or a pre-extruded polymer tyre is bonded on to form a tyre 6. The surface of the tyre 6 bearing against the rim 5 intrudes into the concave moulding and overlaps the convex section rim features 5.1 bounding the concave section feature.

*.* The cockpit comprises a tubular space frame formed from two mirror similar generally circular left and right side frames 8 and 9. Each side frame is supported in spaced relation by a horizontal beam 10, and an axle support beam 11 which is rigidly secured to flanges on the side frames. Each side frame has three segments of arcuate tubing spanning between three lobes 12 formed from radially outwardly extending tubing and portions of arcuate tubing. A suspension mounting-flange 13 is secured by welding to each lobe. When oriented for use two lobes are disposed so that a line between them runs substantially parallel to the ground and above the nadir of a mounted main wheel 1 and 2. Thus there is a front lobe, a rear lobe and an apex lobe. The third lobe is disposed at the apex of the side frame.

*.* Each suspension assembly 7 comprises an arcuate leaf spring 14 fabricated from carbon fibre and secured medially by bolts one each to each suspension mounting flange 13 so that the free ends of each leaf spring extend substantially circumferentially. A nylon block 13.1 is secured to the flange 13 to sit between the leaf spring 14 and the flange and facilitate installation of the leaf spring. In the case of the front lobe suspension and the apex suspension idler wheels 15 are mounted to each free end of the leaf spring. In the case of the rear lobe suspension assembly one idler wheel 15 is mounted to one end of the leaf spring while a drive wheel and motor assembly 16 is mounted to the other end. Each idler wheel 15 has a concave rim adapted to receive the convex radially inner surface of a main wheel rim 1, 2 so that the cockpit is suspended coaxially with the main wheels and each main wheel can rotate independently around its centre. The idler wheels run (bear) on the sides of the rim and drive wheel runs (bears) on the top (inside) of the rim. A hard wearing friction coating is applied to the top of the rim for greater traction and an anti-friction coating is applied to the sides of the rims for the idlers to move fast with as little friction as possible.

*.* The stiffness of the wheel section and support provided by the suspension assemblies leaves a space inside the wheel rim unobstructed. Thus access to a payload space in the cockpit can readily be achieved through either main wheel and side frame. Resilient bump stops 64 are mounted one each onto a bracket 65 at the ends of each respective side frame lobe 12 to bridge the space between the bracket and the leaf spring. Removing the bump stops 64 from the brackets 65 facilitates mounting the either of the main wheels 1, 2 onto the idler wheels 15 and drive wheel 16 during initial assembly or subsequent maintenance. The resilience of each bumps stop 64 facilitates installation on its respective bracket 65 and ensures each main wheel 1, 2 remains engaged with the idler wheels 15 and drive wheel 16. Conversely removal of each bump stop 64 associated with a respective main wheel 1, 2 facilitates removal of the main wheel during maintenance. Additionally the resilience of the bump stop 64 serves to effectively increase the spring stiffness and absorb more of the impact energy to protect the side frame and vehicle occupants. Each bump stop 64 is of conical section to limit suspension travel with progressively increasing force. The insertion of the bump stops last in the build suspension assembly fixes the assembly securely in place and the give in the rubber allows ease of assembly.

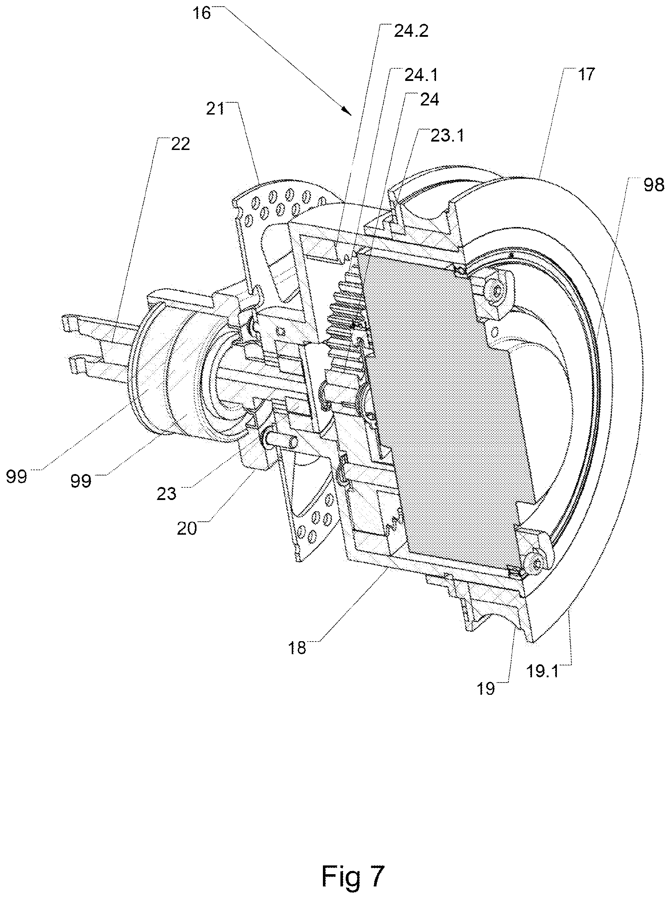

*.* The left drive wheel and motor assembly 16 is shown in detail in figure 7. A main drive wheel 17 is mounted for rotation on the casing 18 of an electric motor. The drive wheel is of substantially greater diameter than the idler wheels but also has a concave rubber section 19 to engage with the convex inner surface of the main wheel rim. Nylon flanges 19.1 stop the drive wheel from coming off the rim. The concave section may be lined with a high friction material to improve traction between the drive wheel and main wheel. An upright assembly 20 of the motor is secured to the front end of the leaf spring 14. A brake disc 21 is secured coaxially to and inboard of the casing 18 to run between the pads of a disc calliper 21.1 mounted on the upright assembly 20. An external drive shaft 22 is coupled to a sun gear 24 engages with a planetary gear 24.1 which engages an orbital ring gear 24.2 inside the casing whereby torque can be applied to the casing from each or either of the interaction of electrical current applied to the motor upright and rotor or the external drive shaft. The electric motor can be operated to apply regenerative braking to the rotor casing 18 which can be supplemented at need by the application of the disc brake callipers to the brake disc thereby braking the left main wheel 1 engaged with the drive wheel. The right drive wheel assembly is a mirror of the left drive wheel assembly.

*.* Magnets 23.1 for sensing motor speed are disposed on the flange of the drive wheel 17 to interact with a sensor whereby the drive wheel speed is sensed and reported to the controller. The controller compares input data from the joystick to output speed data of the motor together with output speed data from the corresponding main wheel 1, 2 to ensure any discrepancy between input intention and output speed of the main wheel 1, 2 is corrected if there is any slipping of motor, drive wheel 17 or main wheel 1,2.

*.* A sprag-clutch 23 and large ring ball bearings 99 allow the drive wheel to freewheel on declines and when the main wheels have momentum.

*.* Each drive shaft 22 is coupled to a manual transmission comprising a left half shaft assembly and right half shaft assembly 25 each including two universal joints with extension 26 allowing each half shaft 25 to couple with a double freewheel differential 27 of a manual transmission allowing each half shaft to rotate at different speeds. The resulting articulating and telescopically extensible half shafts allow the manual transmission to drive the drive wheels 17 and accommodate suspended movement of the drive wheels. The half shafts 25 allow the action of the wheel rims and tyres against the ground which stops pitch movement and forms part of the mechanical pitch control. A final drive sprocket 28 around which a final drive belt 29 leads to a secondary belt drive sprocket 30 on the passenger's side. Secondary drive belt 30 is axially coupled by a shaft to CVT automatic hub gears 87. CVT automatic hub gear 87 is axially coupled with another intermediate sprocket, on the driver's side, that engages a first drive belt 32. The first drive belt 32 couples with a front sprocket 33 axially mounted onto a double freewheel cassette 34. The double freewheel cassette 34 couples the front sprocket 33 to each or either one of a left treadle assembly and a right treadle assembly. The final drive belt 29 is installed and tensioned by the CVT hub gears 87 being mounted on hub gear mounting brackets 31 that slide forwards and towards the rear of the vehicle in relation to the floor. The first drive belt is installed and tensioned by a pulley 31.2 with adjustable position in a slot in the foot pedal mounting bracket 31.1 which is attached to the floor moulding.

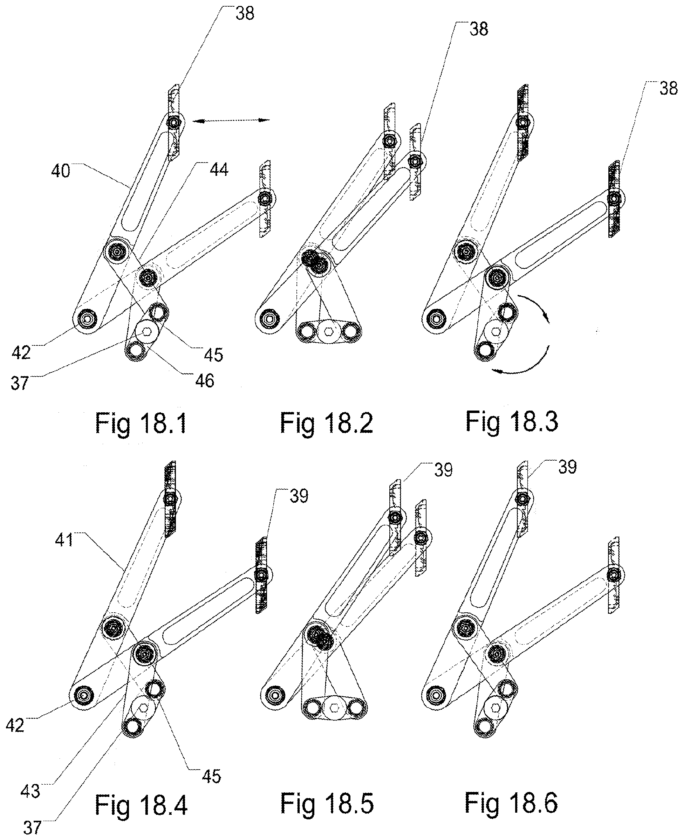

*.* The axle support beam 11 supports each of the treadle assemblies 35 and 36, the double freewheel 34 and thereby the treadle belt pulley 33. Each treadle assembly includes and is coupled to a respective a left and right treadle drive shaft 37 supported by the axle support beam 11. Each treadle assembly is a mirror of the other except that independent movement of the passenger and driver pedals can be accommodated by the double differential freewheel 34 and the passenger and driver side drive shafts are of different lengths. As shown in figure 18 the treadle assembly comprises a right pedal 38 disposed adjacent to a left pedal 39 rotatably supported on corresponding right and left crank arms 40, 41. Each crank arm is mounted for reciprocating rotation around a bearing on a common axis provided by a pivot 42. A draw arm 43, 44 extends from a bearing located between the axis 42 and pedal 38, 39 to attach to an end of a cam or rotor arm 45, 46 coupled to the treadle drive shaft 37. The arms comprise a treadle linkage mechanism such that when one pedal is pushed towards a far position the other returns to a near position ready to be pushed. The treadle drive shaft is run to the corresponding left or right side of a central cassette body that houses 2 freewheels 34 whereby torque can be applied to the front sprocket in one direction. Figure 18.1 shows the right pedal up and left pedal down on the left stroke. Figure 18.2 shows the mid-position of the right stroke and figure 18.3 shows the right pedal down and left pedal up with the last movement of the pedal pushing the cam over centre. Similarly figure 18.4 illustrates the left stroke with the left pedal up and the right pedal down, such that the cam starts over centre. The left stroke moves to the mid stroke position shown at figure 18.5 and then to the end of pedal down movement shown in figure 18.6 where the end of pedal down movement forces the left pedal and cam to an over centre start position. The treadle assembly is arranged significantly out of phase with a phase angle of more than 0° and less than 180°so that each of the left and right draw arms can never come to rest linearly aligned with the crank arm at the same time. As a consequence of this arrangement the treadle mechanism cannot immovably lock out or reverse. Because the left and right pedals of each treadle assembly are out of phase the torque applied to the treadle drive shaft is relatively smoothed over each cycle. The pedals of each of the left and right pedal assemblies are set out of phase with any other pedal to further smooth the torque delivered to the treadle drive shaft. The effect of this arrangement is to ensure that torque to the treadle drive shaft 37 is applied in a single direction whatever the starting position of the pedals 38, 39 and can never be zero when the pedals are in motion.

*.* Power to the pedals and hence to propel the biwheel is thus delivered by a driver sitting in one of the two adjacent seats 48, 47 and a passenger sitting in the other of the seats applying thrust to the pedals via their feet. The seat is constructed from a tubular aluminium seat frame as shown in the drawings. The frame is covered with a foam and mesh material seat cover with low energy draw heated elements, or conductive material layer, which can be turned on from console buttons. An antibacterial mesh seat cover allows good ventilation and low power heating.

*.* In a variant of the seat a moulded flax upholstered bucket seat may be provided in place of the tubular aluminium frame seat and may include integrated heating elements.

*.* Because of the freewheel it is possible to propel the biwheel via only one side of the pedal assembly. Torque sensors and cadence sensors (not shown) are disposed on each of the driver and passenger side to signal an applied to torque and speed to the controller. However, the controller is only responsive to the driver's torque sensor to actuate the motors. When the driver applies the brake the passenger cannot pedal.

*.* An accumulator system is disposed centrally in the cockpit in an accumulator housing 49 The accumulator housing 49 contains a removable rechargeable battery 78 and a fixed battery 85 in a compartment 86. The removable battery 78 has a handle 90 to facilitate removal of the battery and carrying the battery to a standard mains supply socket for charging. The fixed battery remains to gather charge from a solar panel array 50 disposed on a canopy panel 51 supported on the top of the cockpit. The solar panel array is fabricated from flexible solar panels to conform to the arcuate shape of the canopy. In a variant the solar cells are embedded in resin into the composite monocoque roof.

. The accumulator system can deliver power to each motor according to a control system responsive to a joystick control 52 mounted onto a central console 53. In a variant of the biwheel the console can be disposed on the driver's side. The control system may also be responsive to various sensors including attitude sensors to control the delivery of torque to the motors in order to minimise pitch movement. The joystick 52 also supports buttons 52.2 to control front, rear and side indicator lights mounted on the body of the biwheel. A deadman's handle button 52.1 is provided on the side of the joystick which if released underway will gently apply the brakes to bring the biwheel to a halt and flash the lights to indicate a hazard.

. A control panel 53.1 on an arm rest 53.2 has button controls for front and rear lights, hazard lights, side ring lights, horn, heated seats and windscreen wipers. central console 53 has a fixing 53.3 whereby a smart phone 53.4 with a cover slots and secures onto a vehicle mount. The smart phone is the display for the vehicle. Vehicle settings and preferences are controlled from the phone while not driving The smart phone becomes a security feature whereby only the driver can use the vehicle using the phones facial recognition identification software. The parking brake will only release for a driver registered to the phone.

*.* The smart phone becomes the interface and console for all other controls and feedback displays in the biwheel such as speed, state of battery charge, miles travelled, music being played, GPS location, pick up point, destination, passenger details, how much pedal assist is being given, temperature, temperature of seats, calories used, fitness statistics, audio training advice. This information may be delivered via a driver app or webpage installed on a general purpose smartphone. The vehicle has charge points for both driver and passenger's phone on the central console and directly on the battery.

*.* A passenger app will have taxi function features such as location, pick up, speed of journey and destination, driver details, fitness feedback in terms of calories burnt, and fitness levels if coupled with passenger's heart rate monitor wearable. The passenger can connect with other friends and taxi users to compare and compete against each other in terms of raising fitness levels, gamifying training on a commute, giving social support during fitness training encourages the passenger to keep and increase fitness. The vehicle will use its GPS location sensors to provide the passenger with interesting local knowledge of their choice of the local area when driving through, such as landmarks, history, tourist spots, places to shop, restaurants and other places of interest. This local knowledge can appear on a passengers phone or can be heard audibly which the passenger chooses. Speakers are located on either side of the ring housing to each side of the passenger and driver's ears to create a stereo effect. The removable battery has a digital display with state of charge and other limited essential vehicle back up display feedback as such vehicle warnings, as well as it being displayed on the phone. The vehicle has a motion sensor whereby the controller is responsive to someone getting in the vehicle or moving the vehicle, the on board cameras automatically turn on and video is recorded and relayed to the driver's phone.

*.* Two brake levers 54 are mounted on the joystick 52. The joystick 52 is prevented from forward motion by an abutment which allows the joystick and brake levers to be normally squeezed together equally to actuate each disc calliper evenly to brake the main wheels 1,2. The brake levers 54 may be actuated independently to apply uneven braking for manual steering control if the power steering fails. A latch can be applied to the hand brake levers 54 whereby the brake levers can be latched into the braked position so that the callipers brake the main wheels thereby creating a parking brake feature to the drive wheels 17.

. Each of a rear jockey wheel 61 and the front jockey wheel 62 incorporate a parking caliperbrake disk or pancake brake for a secondary vehicle to floor parking brake. A button on control panel 53.1 is provided on the console which is manually operable to apply the parking brake in both jockeys wheels when the vehicle is stationary for embarking or disembarking. In motion the disc brakes and regenerative braking may be actuated in response to motion of the brake levers mounted vertically on the joystick to steer or slow the biwheel.

*.* The cockpit includes a front windscreen 75 and a rear windscreen panel 57. A floor moulding 55 comes up to meet with a boot moulding 55.1. The boot moulding forms a seat bench and the rear boot area of the vehicle. The transmission tunnel in the floor has an electronics channel (cavity) 97 moulded in and a part of the boot moulding 55.1 covers the top of the channel so the electronic wires are well protected from the elements. The vehicle is single skinned and without this feature the wires would run on the outside, underside of the vehicle unprotected from the elements.

*.* The floor moulding is configured to provide for storage space 58 under each of the driver and passenger seats large enough for 2 cabin flight cases and duty free under the case. Each of the driver and passenger seats can pivot around a pivot at the front of the seat and seat mount 59 when an overlocking lever cam latch, used to latch the rear of the seat down to position 93, is released to slide off a half pipe mount structure 82. This facilitates access to a storage compartment 60 formed behind the seat back in the boot moulding 55.1. The boot moulding is sized to accommodate a large size suitcase behind the seats. By sliding adjustment of the seat mount the seat position can be adjusted to ergonomically suit any height of user to the distance from the seat to the pedals and give increased personal space. The seat pivot and half pipe mount structure 82 are in turn secured to a pair of parallel laterally extending seat leaf springs 91 and the leaf springs span between two parallel longitudinally oriented slide mechanisms 92. The leaf springs provide additional suspension to isolate the occupant (driver or passenger) from shocks applied to the main wheels 1, 2.

. A circular fairing 72 is mounted to extend between each main wheel 1, 2 and the arcuate portions of the side frames 8, 9 in order to further protect the suspension assemblies and prevent anyone from imprudently catching clothing, body parts or the like in between the main wheels and the suspension assemblies etc.

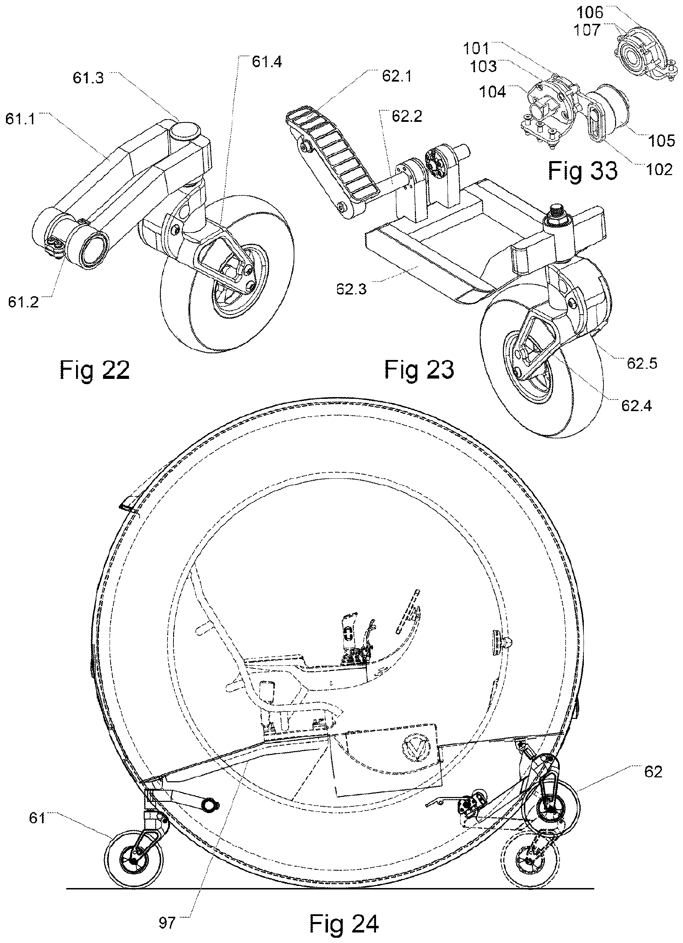

*.* A ground engaging rear jockey wheel assembly 61 is permanently deployed from the rear of the biwheel cockpit to prevent the biwheel from pitching backwards. As shown in figure 22 the rear jockey wheel assembly 61 comprises a rear jockey wheel arm 61.1 with two cylinders at the end that are nylon lined and slide on and swivel on the tubular rear chassis beam 10. The jockey wheel arm 61.1 is clamped into position on the chassis beam 10 with nylon cylindrical nylon clamp 61.2. Two ball bearings are housed in vertical cylinder section of jockey wheel arm 61.1 to support the vertical axle of the jockey wheel fork 61.4 to allow swivel when the vehicle turns. A calliper brake or pancake brake may be installed into the rear jockey wheel to provide a parking brake.

*.* The front jockey wheel assembly 62 is mounted on an articulating assembly responsive to a foot pedal actuator 62.1 inside the cockpit. When parked the foot pedal is operated to lower the front jockey wheel into engagement with the ground to prevent the biwheel pitching during driver or passenger ingress or egress. When getting underway the pedal is operated to elevate the front jockey wheel to disengage the ground. When elevated the front jockey wheel 62 is elevated to clear a kerb so the vehicle will climb the kerb with the two large wheels rather than the front jockey wheel . Also any impact with the kerb to the front and rear will be absorbed through the suspension of the main wheels as the suspension works both vertically and horizontally . Figure 23 shows the front jockey wheel assembly in detail. This shows the foot pedal 62.1 mounted to a rotary shaft 62.2 by means of a ratchet mechanism located inside the body of the pedal. The rotary shaft 62.2 extends perpendicular to the longitudinal axis of the pedal 62.1 to engage a front jockey wheel suspension arm 62.3. The front jockey wheel arm assembly is mounted to the floor through floor moulding clamps 62.6. A front jockey wheel fork 62.4 depends from the front end of the suspension arm 62.3 to support a front jockey wheel axle and thereby the front jockey wheel 62.5. As with the rear jockey wheel, the front jockey wheel may include a pancake brake or caliper brake. Operation of the foot pedal allows the driver to elevate the front jockey wheel 62.5 sufficiently to clear a kerb for normal driving. Operation of the pedal when the front jockey wheel is elevated disengages the ratchet mechanism so that the arm lowers the wheel to engage the ground and latch into position as the ratchet reengages.

*.* Figure 33 illustrates the mounting brackets for securing the front jockey wheel into the biwheel. Left hand end of shaft 62.2 is socketed into a bearing housed in bearing housing 101 to couple with a sleeve from which radiate and arrangement of teeth 104. The sleeve and teeth are received into a chamber in a lower end of the foot pedal 62.1 where the teeth cooperate with a ratchet mechanism. The bearing housing forms a part of a mounting bracket structure 103 including a right angle bracket whereby machine screws can secure the bracket to one side of the transmission tunnel. A second jockey wheel trunnion shaft extends coaxial with shaft 62.2 and is received into a socket in a bearing 107, housed in structure106. Similarly to structure 103, structure 106 has a portion lying parallel to the axis of the bearing through which machine screws can be received to secure the structure 106 to the floor of the biwheel adjacent the transmission tunnel. In this condition the bearings allow the trunnion shafts to rotate. The pedal 62.1 is composed of a body and a foot rest part pivotally mounted onto the body. When the driver applies force to a part of the footrest above the pivot the ratchet mechanism is disengaged to facilitate raising the jockey wheel, when the driver applies force to the portion of the pedal below the pivot the ratchet mechanism is released or reversed to allow the front jockey wheel to be lowered to engage the ground and locked in the ground engaging position.

*.* "U" shaped anti pitch bars 63 are mounted onto the axle support beam to project forwards. Ordinarily the "U" shaped anti pitch bars are not used due to digital and mechanical anti gerbiling systems and the presence of a front jockey wheel. These "U" shaped anti pitch bars would only be used in failure mode if the front jockey wheel has fallen off and all other anti-gerbilling systems have failed. It is a final insurance the vehicle cannot gerbil. These U shaped bars can have additional small runner wheels to make sure the vehicle slides rather than rotates if they ever engage the ground.

*.* The outside ring fairing 72 and inside ring fairing 72.1 weather protect the suspension mechanism, drive wheels assemblies and prevent fingers or clothes getting caught in the mechanism. Both the inside and outside fairing look to be standard painted body parts but when the vehicle turns on the spot or a button on control console 53 is pressed at night the extremity of all 4 rings (inside and out) illuminate. The ring fairings are treated with electroluminescent paint and a current is carried by a copper ribbon or the wire on ring fairing the inside of mouldings. The light ring may be driven by the controller to flash, particularly if the biwheel is turning on its vertical axis. In a variant of the biwheel the light ring may be replaced by LED ribbon lights or strips or any other light source suited to the application.

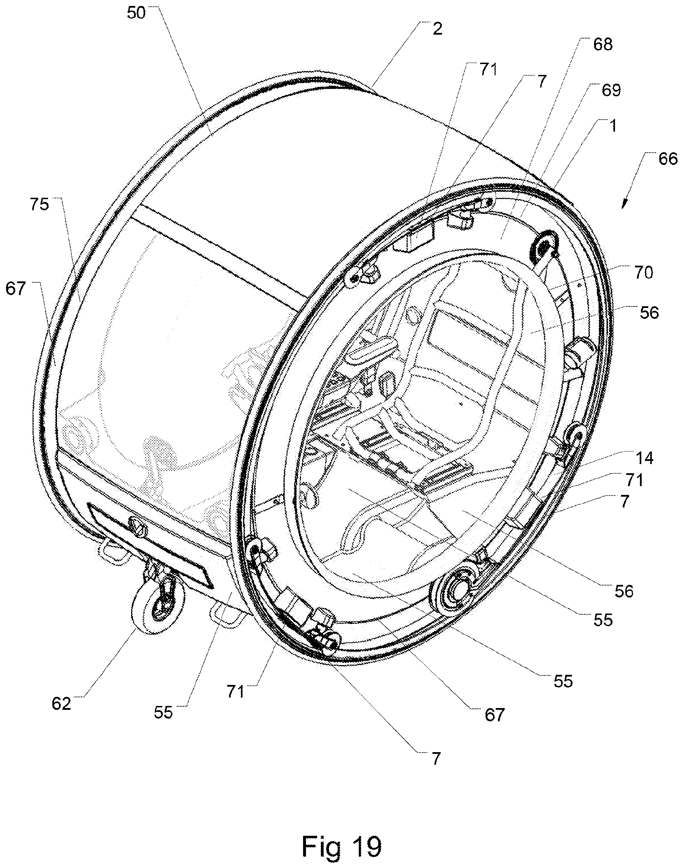

*.* Figure 19 shows a second embodiment of the invention having similar components similarly enumerated. The space frame cockpit structure is replaced by a monocoque structure 66. The monocoque structure is generally cylindrical and assembled from three structural moulded parts and provides a flatter floor area for safe entry and ground clearance. The monocoque 66 is assembled from a floor moulding 55, a boot moulding 56 and a roof moulding 68. The floor moulding 55 has an integrated transmission tunnel cavity for the drive train accessible from the outside. During assembly the drivetrain is mounted into the upside down floor moulding first, wires are run in a moulded trough feature in the floor moulding 55. The boot moulding which includes a rigid seat bench feature sits on top of a central floor transmission tunnel and both side structure in the floor moulding and therefore creating 3 strong points of contact while facilitating a storage area under the seat. The assembled floor moulding 55 and boot moulding 56 create a half circle lower monocoque structure with the wires fully enclosed from the elements. The upper half circle roof moulding 68 is then lowered on top and slots into the floor/boot moulding half forming a strong monocoque. The monocoque rim 70 replaces side frame 8 and 9 in that suspension assemblies 7 are mounted one each to each of three mounting blocks 71 disposed around the periphery of the rim 70. The cockpit is thus stronger and lighter than the cockpit fabricated from steel or aluminium tubing and attached panels.

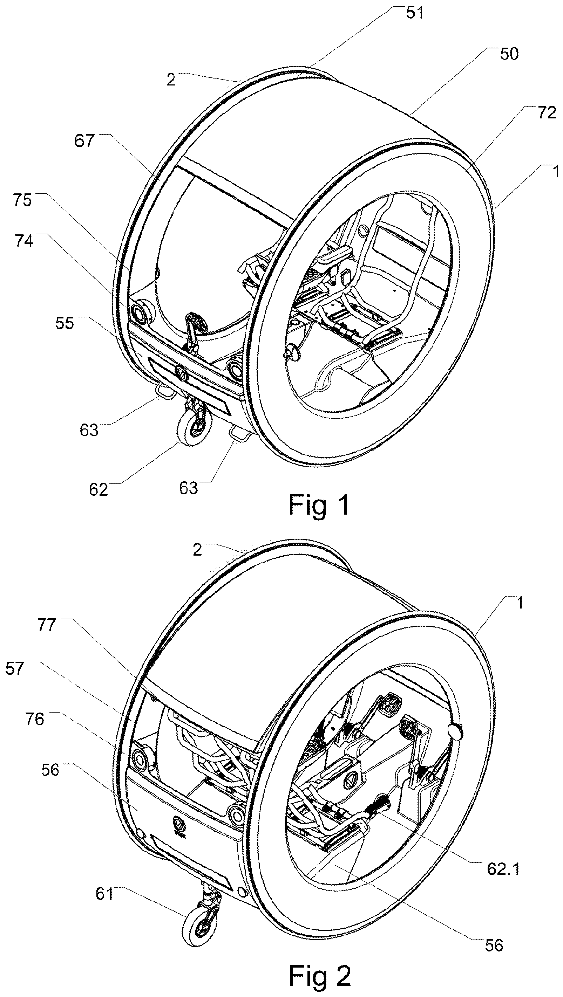

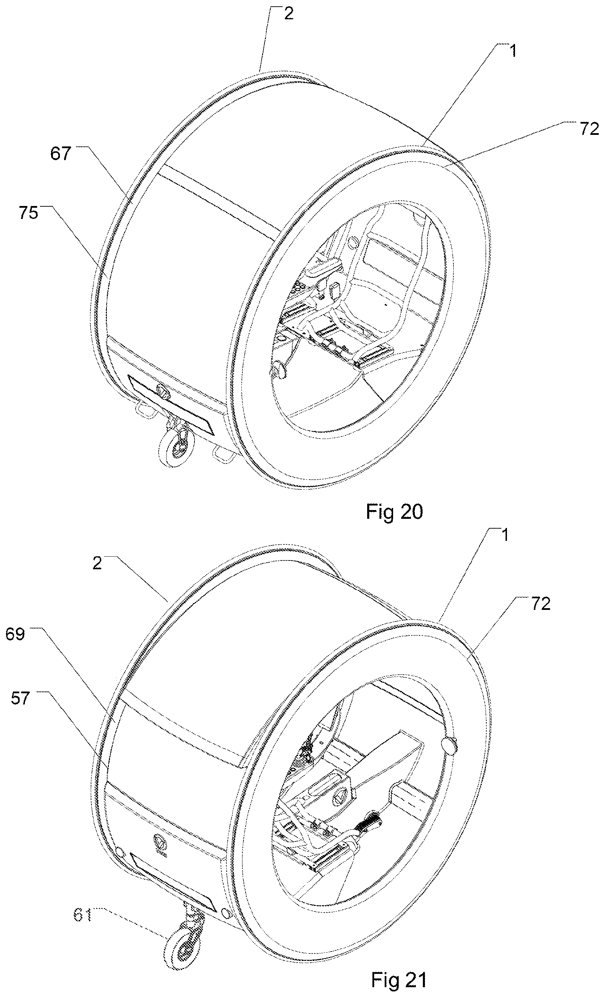

*.* Figures 20 and particularly 21 illustrate a third embodiment of the biwheel in which the manual pedal assistance systems previously described is eliminated and the biwheel is solely powered via electric motors. Figure 1 also shows a pair of forward facing spot light units 74 mounted to shine through a transparent front windscreen 75. The head lights are arranged to cast a beam forward of the biwheel to illuminate the field of view ahead. The each head light unit 74 can include a ring light encircling a head light lens to provide an indicator light controlled to flash amber to indicate the driver's intent to turn, or to provide a hazard warning in response to manual controls on the control panel. A pair of rear running and brake indicator light assemblies 76 are disposed to shine through the transparent rear windscreen panel 57. Each light assembly provides a red centre light and a ring light responsive to the application of the brakes to provide a warning light under braking, as with the front lights, the light units may flash amber to indicate an intent to change direction or provide a hazard warning. A chisel light 77 is disposed above the rear windscreen arranged to illuminate in response to operation of a brake.

*.* Speaker grill and loud speaker 78 with integrated seat belt exit slot is mounted on a seat belt pillar loop 79 which can rotate for ease of use and from which a seat belt extends from a seat belt dispenser spool 80 mounted on mount 80.1 to secure to a seat belt receiver 81.

*.* Seat release clamp 82, clamps a lower structure mounted on a seat suspension leaf spring 91 secured to seat sliders 92 which are secured to a seat bench in the boot moulding 56. A clamp releases with a lever attached to over centered cam then clamp slides to the side off the lower half pipe structure mounted to the leaf spring. When the clamp is released the seat can fold forward to access the boot space. The seats can also slide forward and back to accommodate different height people or give more personal space by staggering seating in relation to the driver.

*.* Rear view door mirrors 83 are provided with flashable indicator lights.

*.* A licence or number plate 84 is mounted on the front and rear.

*.* Vehicle essential back-up display 88 is provided on the battery 78 which displays battery state of charge, warnings, gear, speed, time etc.

*.* An automatic gear sensor 89 is provided on the gear box 87.

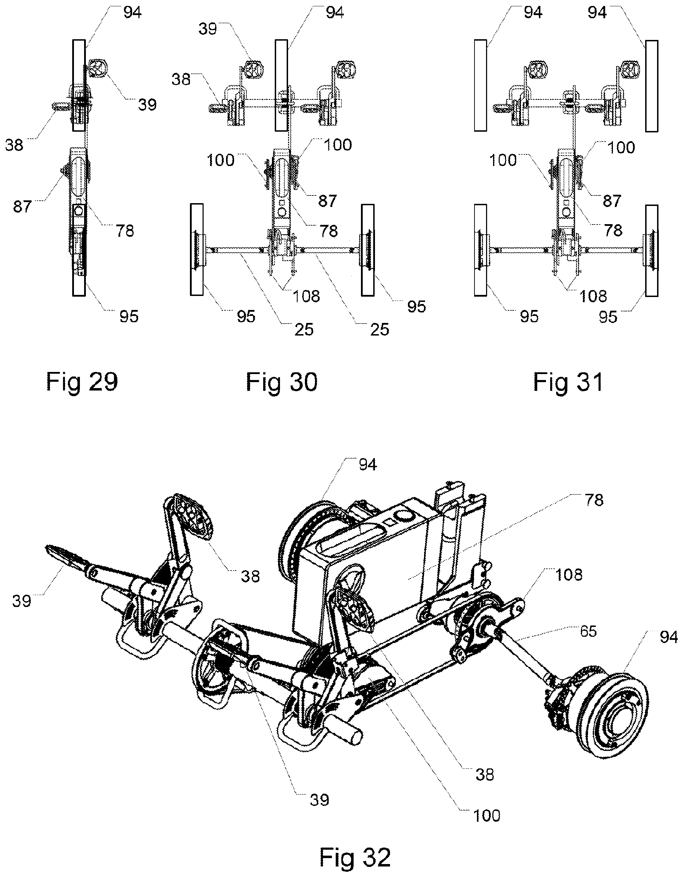

*.* Figure 29 illustrates the use of the treadle propulsion mechanism described above installed in a bicycle with a front steering wheel 94 mounted to a fork and steerer tube supporting handlebars. The treadle mechanism is manually operated by pedals 38,39 providing torque to an automatic gear box 87, which then delivers torque via a belt, chain or shaft drive to a rear drive wheel 95. As with the biwheel power assistance can be delivered via an electric motor coupled to the rear drive wheel, preferably via a hub motor, or to the hub gearbox. Power for the motor is provided via battery 78. A controller (not shown) manages the power assistance in response to sensors arranged to sense the force applied to the pedals, the weight of the vehicle and vehicle pitch (indicating the vehicle climbing or descending) and road speed.

*.* Figure 30 shows the treadle power train in a tricycle having a front steering wheel 94 generally similarly mounted to the bicycle arrangement. The tricycle is configured to carry a passenger and driver saddled side by side. The output from the drive train is to two half shafts which may be rigid but are preferably articulating half shafts coupled to each of a pair of suspended left and right propulsion wheels 95 to allow the tricycle chassis to roll (lean) into turns. Each propulsion wheel is supported on a hub drive motor assembly 96 generally similar to that shown in figure 7 but instead of mounting a main drive wheel 17 the motor casing 18 directly mounts and drives the associated ground engaging propulsion wheel 95.

*.* Figure 31 shows the treadle power train deployed in a quadricycle generally similar to the tricycle of figure 30 but having a pair of parallel steering wheels usually steered using a parallelogram mechanism in a manner know to the skilled person. The drive train is otherwise similar to that for the tricycle.

## Claims

1. A biwheel having:
a pair of spaced ground engageable main wheels (1,2) disposed relatively parallel to each other to suspend a cockpit (3) between them, said cockpit (3) capable of accommodating a payload,
a power transmission arranged to apply torque to each wheel to propel the biwheel over the ground;
each wheel is supported at and torque is applied to each wheel solely at its rim,
thereby obviating any rim support extending between the axis and the rim so that access to the cockpit (3) can readily be achieved through the space inside the wheel rim
each main wheel is supported by a plurality of suspension assemblies (7) disposed spaced around the circumference of each main wheel (1,2) to act between the inside of a rim of the wheel and the cockpit (3),
each suspension assembly comprises a spring supporting at least one of an idler wheel (15) or a drive wheel (16) to absorb a shock applied to the main wheel (1,2) via motion between the main wheel (1,2) and cockpit (3) **characterised in that** the spring is a leaf spring (14).

2. A biwheel according claim 1 wherein the cockpit comprises:
a plurality of circumferentially spaced mountings comprising flanges or blocks, and said leaf springs (14) are secured one each to said mountings;
a bracket (65) is secured to the cockpit and circumferentially spaced from the mounting, and a removable bump stop is mounted in the bracket (65) to span between the bracket and the leaf spring (14).

3. A biwheel according to claim 1 or claim 2 wherein the leaf spring (14) comprises an arcuate leaf spring (14) secured so that each free end of each leaf spring (14) extends substantially circumferentially, each leaf spring (14) is mounted medially to the cockpit (3) and either or each of an idler wheel (15) and drive wheel (16) is mounted to each end to engage the inside of a rim of the main wheel (1,2).

4. A biwheel according to any one of the preceding claims wherein each idler wheel (15) is configured to engage the sides of the wheel rim and not the inner top of the wheel rim and each drive wheel (16) engages the inner axially facing surface of the wheel rim and not the sides, the sides of the rim being treated to reduce friction and the top of the wheel rim being treated to increase traction with the drive wheel (16).

5. A biwheel according to any one of the preceding claims wherein each main wheel (1,2) is cambered at a camber angle of less than 90° to normal to a flat ground surface.

6. A biwheel according to any one of the preceding claims having three or more suspension assemblies (7), wherein the majority of the suspension assemblies (7) are disposed below a central axis of the biwheel and
each suspension assembly supporting a drive wheel is mounted below the axis of the main wheels.

7. A biwheel according to any one of the preceding claims wherein torque is applied to each drive wheel (16) by an electric motor integrated into each drive wheel the torque controlled by a digital controller according to an algorithm responsive to an attitude sensor sensitive to the attitude of the cockpit (3) to maintain the cockpit (3) at a substantially constant pitch angle.

8. A biwheel according to any one of claims 1-6 wherein torque is applied to each drive wheel (16) by an electric motor mounted in a transmission tunnel.
the torque controlled by a digital controller according to an algorithm responsive to an attitude sensor sensitive to the attitude of the cockpit (3) to maintain the cockpit (3) at a substantially constant pitch angle.

9. A biwheel according to one of claims 6 or 7 having an accumulator system mounted in the cockpit (3) to store and distribute electric charge to each electric motor wherein the accumulator system comprises a fixed battery (85) and a removable battery (78) whereby a discharged removable battery (78) can be readily removed for charging and replaced with a charged battery.

10. A biwheel according to claim 9 wherein the cockpit includes a canopy panel (51) supporting a solar panel array (50), said solar panel array (50)disposed to deliver charge to at least one of the fixed and removable batteries (85,78).

11. A biwheel according to any one of the preceding claims wherein each main wheel rim (1,2) comprises an ovalized tubular, cross section with a convex interior surface and a concave exterior surface wherein a solid tyre (6) is formed onto the concave exterior surface of the rim .

12. A biwheel according to any one of the preceding claims wherein the cockpit (3) includes at least two seats (47, 48) to accommodate a driver and a passenger disposed abreast or staggered abreast and wherein luggage space (58) is formed into a floor moulding under each seat
a storage compartment (60) is formed in the floor moulding located behind each seat to provide a luggage space for a suitcase and said seats are displaceably mounted to provide access to the storage compartment behind each seat.

13. A biwheel according to any one of claims 7-12 wherein a brake is associated one each with each drive wheel (16) to apply a braking torque to each main wheel (1,2) via the drive wheel (16) said brake comprising an assembly integrated with the drive wheel and motor assembly inside the rim.

14. A biwheel according to claim 6 wherein an unequal torque is applied to each drive wheel (16) in response to control signals from the digital controller emitted in response to movement of a joystick (52) from a neutral position in order to steer the biwheel away from a straight-line movement.

15. A biwheel according to claim 13 wherein a braking torque can be applied to each drive wheel brake (16) in response to operation of a brake lever (54) arranged to be operable by one hand, in either of equal amounts or unequal amounts.

16. A biwheel according to any one of the preceding claims having a rear jockey wheel (61) deployed to be normally ground engaging and to thereby limit rearward pitching of the cockpit (3)
the brake provided in the rear jockey wheel being manually operable from a latchable control in the cockpit to discouraging movement of the biwheel.

17. A biwheel according to any one of the preceding claims having a front jockey wheel (62) mounted on an articulating assembly responsive to a manually operable actuator inside the cockpit (3) whereby the front jockey (62) wheel is normally elevated and spaced above the ground and can be lowered and latched to engage the ground; and a brake is provided in the front jockey wheel, said brake being manually operable from a latchable control in the cockpit to discouraging movement of the biwheel..

18. A biwheel according to any one of claims 6 to 15 having a manual propulsion system in addition to the electric motor propulsion to augment each electric motor wherein manual propulsion is provided from pedals disposed so that thrust applied via the foot of a driver or passenger to the pedal is transmitted via a manual propulsion transmission system to apply an equal torque to each drive wheel (16).

19. A bi-wheel according to claim 18 wherein each pedal converts a linear thrust to a torque via a treadle assembly;
said treadle assembly is associated with the driver occupied seat at least and each said treadle assembly includes a left pedal and a right pedal linked via respective left and right treadle linkage mechanisms to a common treadle drive shaft, wherein the phase angle between the left and right linkage mechanisms is not 0° or 180° in order to prevent the linkage from coming to rest in a locked out condition or applying a reverse torque;
a treadle assembly is associated with each driver and passenger chair of the biwheel; each treadle drive shaft can couple to a common front sprocket in the manual propulsion system;
the front sprocket transmits torque to a double freewheel differential by way of an automatically operable gear box, said differential coupling each of two half shaft assemblies into the manual propulsion transmission system, whereby each drive wheel is coupled into the manual transmission system;
each treadle drive shaft couples to a treadle belt pulley via a freewheel;
each passenger treadle assembly is uncoupled from the treadle belt pulley unless thrust is applied to the pedals of the driver treadle assembly.

20. A biwheel according to claim 16 wherein a control system is responsive to:
torque applied to the driver's pedals, and
the joystick being in a neutral position
to apply assist torque to each motor to stabilise the pitch of the cockpit and drive the biwheel in a forwards direction.

21. A biwheel according to claim 20 wherein the control system is responsive to:
the speed of the biwheel being sensed from a sensor to be substantially zero and
the movement of the joystick from neutral to a position to the left or right of neutral to apply an equal and opposite torque from the motors to each drive wheel in order to turn on the spot.

22. A biwheel according to one of claims 20 or 21 wherein the control system is responsive to pressing a button on the joystick and pulling back to reverse.

## Patentansprüche

1. Bi-Rad, das Folgendes umfasst:
ein Paar beabstandete, mit dem Boden eingriffsfähige Haupträder (1, 2), die relativ parallel zueinander angeordnet sind, um ein Cockpit (3) dazwischen aufzuhängen, wobei das Cockpit (3) fähig ist, eine Nutzlast unterzubringen,
eine Leistungsübertragung, die dazu angeordnet ist, auf jedes Rad Drehmoment aufzubringen, um das Bi-Rad über den Boden vorwärtszutreiben;
wobei jedes Rad nur an seiner Felge getragen wird und nur an seiner Felge Drehmoment aufgebracht wird, wodurch verhindert wird, dass sich jeglicher Felgenträger zwischen der Achse und der Felge erstreckt, sodass Zugang zu dem Cockpit (3) ohne Weiteres über den Raum innerhalb der Radfelge erreicht werden kann,
wobei jedes Hauptrad von einer Vielzahl von Aufhängungsanordnungen (7) getragen wird, die um den Umfang jedes Hauptrads (1, 2) beabstandet sind, um zwischen dem Inneren einer Felge des Rads und dem Cockpit zu wirken,
wobei jede Aufhängungsanordnung eine Feder beinhaltet, die ein Zwischenrad (15) und/oder oder ein Antriebsrad (16) trägt, um einen Stoß zu dämpfen, der über Bewegung zwischen dem Hauptrad (1, 2) und dem Cockpit (3) auf das Hauptrad (1, 2) aufgebracht wird, **dadurch gekennzeichnet, dass** die Feder eine Blattfeder (14) ist.

2. Bi-Rad nach Anspruch 1, wobei das Cockpit Folgendes beinhaltet:
eine Vielzahl von in Umfangsrichtung beabstandeten Befestigungen, die Flansche oder Klötze beinhalten, und wobei an den Befestigungen jeweils eine Blattfeder (14) befestigt ist;
wobei eine Halterung (65) an dem Cockpit befestigt ist und in Umfangsrichtung von der Befestigung beabstandet ist und ein entfernbarer Anschlagpuffer in der Halterung (65) montiert ist, um den Abstand zwischen der Halterung und der Blattfeder (14) zu überspannen.

3. Bi-Rad nach Anspruch 1 oder Anspruch 2, wobei die Blattfeder (14) eine bogenförmige Blattfeder (14) beinhaltet, die derart befestigt ist, dass sich jedes freie Ende jeder Blattfeder (14) im Wesentlichen in Umfangsrichtung erstreckt, wobei jede Blattfeder (14) mittig an dem Cockpit (3) montiert ist und an jedem Ende ein Zwischenrad (15) und/oder ein Antriebsrad (16) montiert ist, um das Innere einer Felge des Hauptrads (1, 2) in Eingriff zu nehmen.

4. Bi-Rad nach einem der vorangehenden Ansprüche, wobei jedes Zwischenrad (15) dazu konfiguriert ist, die Seiten der Radfelge und nicht das innere Obere der Radfelge in Eingriff zu nehmen, und jedes Antriebsrad (16) die innere, in Axialrichtung weisende Oberfläche der Radfelge und nicht die Seiten in Eingriff nimmt, wobei die Seiten der Felge behandelt sind, um Reibung zu verringern, und das Obere der Radfelge behandelt ist, um Traktion mit dem Antriebsrad (16) zu erhöhen.

5. Bi-Rad nach einem der vorangehenden Ansprüche, wobei jedes Hauptrad (1, 2) unter einem Sturzwinkel von weniger als 90° gegenüber der Normalen einer ebenen Bodenoberfläche schräggestellt ist.

6. Bi-Rad nach einem der vorangehenden Ansprüche, das drei oder mehr Aufhängungsanordnungen (7) umfasst, wobei die Mehrzahl der Aufhängungsanordnungen (7) unterhalb einer Mittelachse des Bi-Rads angeordnet ist und
jede ein Antriebsrad tragende Aufhängungsanordnung unterhalb der Achse der Haupträder montiert ist.

7. Bi-Rad nach einem der vorangehenden Ansprüche, wobei Drehmoment durch einen in jedes Antriebsrad (16) integrierten Elektromotor auf jedes Antriebsrad aufgebracht wird,
wobei das Drehmoment von einer digitalen Steuerung gemäß einem Algorithmus gesteuert wird, der auf einen auf die Lage des Cockpits (3) empfindlichen Lagesensor reagiert, um das Cockpit (3) unter einem im Wesentlichen konstanten Kippwinkel zu halten.

8. Bi-Rad nach einem der Ansprüche 1-6, wobei Drehmoment durch einen in einem Übertragungstunnel montierten Elektromotor auf jedes Antriebsrad aufgebracht wird,
wobei das Drehmoment von einer digitalen Steuerung gemäß einem Algorithmus gesteuert wird, der auf einen auf die Lage des Cockpits (3) empfindlichen Lagesensor reagiert, um das Cockpit (3) unter einem im Wesentlichen konstanten Kippwinkel zu halten.

9. Bi-Rad nach einem der Ansprüche 6 oder 7, umfassend ein in dem Cockpit (3) montiertes Akkumulatorsystem zum Speichern und Verteilen elektrischer Ladung an jeden Elektromotor, wobei das Akkumulatorsystem eine fixierte Batterie und eine entfernbare Batterie (78) umfasst, wodurch eine entladene entfernbare Batterie (78) ohne Weiteres zum Laden entfernt und durch eine geladene Batterie ersetzt werden kann.

10. Bi-Rad nach Anspruch 9, wobei das Cockpit eine Abdeckhaube (51) umfasst, die eine Sonnenkollektorgruppe (50) trägt, wobei die Sonnenkollektorgruppe (50) dazu angeordnet ist, der festen und/oder der entfernbaren Batterie (85, 78) Ladung zuzuführen.

11. Bi-Rad nach einem der vorangehenden Ansprüche, wobei jede Hauptradfelge (1, 2) einen ovalen röhrenförmigen Querschnitt mit einer konvexen Innenoberfläche und einer konvexen Außenoberfläche beinhaltet, wobei auf die konkave Außenoberfläche der Felge ein massiver Reifen (6) aufgeformt ist.

12. Bi-Rad nach einem der vorangehenden Ansprüche, wobei das Cockpit (3) mindestens zwei Sitze (47, 48) zum Unterbringen eines Fahrers und eines Beifahrers, nebeneinander oder versetzt nebeneinander angeordnet, umfasst und wobei Gepäckraum (58) in ein Bodenformteil unter jedem Sitz eingeformt ist,
wobei ein Staufach (60) in dem hinter jedem Sitz befindlichen Bodenformteil gebildet ist, um einen Gepäckraum für einen Koffer bereitzustellen, und die Sitze verschiebbar montiert sind, um Zugang zu dem Staufach hinter jedem Sitz bereitzustellen.

13. Bi-Rad nach einem der Ansprüche 7-12, wobei mit jedem Antriebsrad (16) eine Bremse assoziiert ist, um über das Antriebsrad ein Bremsmoment auf jedes Hauptrad (1, 2) aufzubringen, wobei die Bremse eine mit dem Antriebsrad und der Motoranordnung innerhalb der Felge integrierte Anordnung umfasst.

14. Bi-Rad nach Anspruch 6, wobei als Reaktion auf Steuersignale von der digitalen Steuerung, die als Reaktion auf Bewegung eines Steuerknüppels (52) aus einer Neutralstellung ausgegeben werden, ein ungleiches Drehmoment auf jedes Antriebsrad (16) aufgebracht wird, um das Bi-Rad von einer geradlinigen Bewegung weg zu lenken.

15. Bi-Rad nach Anspruch 13, wobei als Reaktion auf Betätigung eines Bremshebels (54), der dazu eingerichtet ist, mit einer Hand betätigbar zu sein, ein Bremsmoment in gleichen Beträgen oder ungleichen Beträgen auf jede Antriebsradbremse (16) aufgebracht werden kann.

16. Bi-Rad nach einem der vorangehenden Ansprüche, umfassend ein hinteres Stützrad (61), das ausgefahren ist, um sich normalerweise mit dem Boden im Eingriff zu befinden und dadurch Kippen nach hinten des Cockpits (3) zu begrenzen,
wobei die in dem hinteren Stützrad bereitgestellte Bremse von einem verriegelbaren Bedienelement in dem Cockpit aus manuell betätigbar ist, um Bewegung des Bi-Rads entgegenzuwirken.

17. Bi-Rad nach einem der vorangehenden Ansprüche, umfassend ein vorderes Stützrad (62), das an einer gelenkigen Anordnung montiert ist, die auf einen manuell betätigbaren Aktor innerhalb des Cockpits (3) reagiert, wodurch das vordere Stützrad (62) normalerweise angehoben und in einem Abstand über dem Boden angeordnet ist und abgesenkt und verriegelt werden kann, um den Boden in Eingriff zu nehmen; und
wobei eine Bremse in dem vorderen Stützrad bereitgestellt ist, wobei die Bremse von einem verriegelbaren Bedienelement im Cockpit manuell betätigbar ist, um Bewegung des Bi-Rads entgegenzuwirken.

18. Bi-Rad nach einem der Ansprüche 6 bis 15, umfassend ein manuelles Vortriebssystem zusätzlich zu dem Elektromotorvortrieb, um jeden Elektromotor zu ergänzen, wobei manueller Vortrieb von Pedalen aus bereitgestellt wird, die derart angeordnet sind, dass über den Fuß eines Fahrers oder Beifahrers auf das Pedal aufgebrachter Schub über ein manuelles Vortriebsübertragungssystem übertragen wird, um auf jedes Antriebsrad (16) ein gleiches Drehmoment aufzubringen.

19. Bi-Rad nach Anspruch 18, wobei jedes Pedal einen linearen Schub über eine Tretkurbelanordnung in ein Drehmoment umwandelt;
wobei die Tretkurbelanordnung mindestens mit dem vom Fahrer besetzten Sitz assoziiert ist, und jede Tretkurbelanordnung ein linkes Pedal und ein rechtes Pedal umfasst, die über einen jeweiligen linken bzw. rechten Tretkurbelgestängemechanismus mit einer gemeinsamen Tretkurbelantriebswelle gekoppelt sind, wobei der Phasenwinkel zwischen dem linken und dem rechten Gestängemechanismus nicht 0° oder 180° beträgt, um zu verhindern, dass das Gestänge in einem verklemmten Zustand zum Stillstand kommt oder ein Rückdrehmoment aufbringt;
wobei mit jedem Fahrer- und Beifahrerstuhl des Bi-Rads eine Tretkurbelanordnung assoziiert ist;
wobei jede Tretkurbelantriebswelle zum Koppeln mit einem gemeinsamen vorderen Ritzel in dem manuellen Vortriebssystem fähig ist;
wobei das vordere Ritzel mittels eines automatisch betätigbaren Getriebes Drehmoment auf ein doppeltes Freilaufdifferential aufbringt, wobei das Differential jede von zwei Halbwellenanordnungen in das manuelle Vortriebsübertragungssystem koppelt, wodurch jedes Antriebsrad in das manuelle Übertragungssystem gekoppelt wird;
wobei jede Tretkurbelantriebswelle über einen Freilauf mit einer Tretkurbelriemenscheibe gekoppelt ist;
wobei jede Beifahrertretkurbelanordnung von der
Tretkurbelriemenscheibe entkoppelt ist, es sei denn, es wird Schub auf die Pedale der Fahrertretkurbelanordnung aufgebracht.

20. Bi-Rad nach Anspruch 16, wobei ein Steuersystem darauf reagiert, dass:
auf die Pedale des Fahrers ein Drehmoment aufgebracht wird und
sich der Steuerknüppel sich in einer Neutralstellung befindet,
um Unterstützungsdrehmoment auf jeden Motor aufzubringen, um das Kippen des Cockpits zu stabilisieren und das Bi-Rad in einer Vorwärtsrichtung anzutreiben.

21. Bi-Rad nach Anspruch 20, wobei ein Steuersystem darauf reagiert, dass:
die von einem Sensor her erfasste Geschwindigkeit des Bi-Rads im Wesentlichen null ist und
der Steuerknüppel aus Neutral in eine Stellung links oder rechts von neutral bewegt wird,
um ein gleiches und entgegengesetztes Drehmoment von den Motoren auf jedes Antriebsrad aufzubringen, um auf der Stelle zu wenden.

22. Bi-Rad nach einem der Ansprüche 20 oder 21, wobei das Steuersystem auf das Drücken einer Taste an dem Steuerknüppel und Zurückziehen reagiert, um rückwärts zu fahren.

## Revendications

1. Un deux-roues ayant:
une paire de roues de sol principales engageables (1,2) disposées relativement parallèlement l'une à l'autre pour suspendre un cockpit (3) entre elles, ledit cockpit (3) étant capable d'accueillir une charge,
une transmission de courant arrangée pour l'application d'un moment de torsion à chaque roue pour propulser le deux-roues le long du sol ;
chaque roue est supportée et un moment de torsion est appliqué à chaque roue uniquement à une jante, évitant ainsi un quelconque support s'étendant entre l'axe et la jante afin que l'accès au cockpit (3) puisse être facilement réalisé à travers l'espace intérieur de la jante de la roue
chaque roue principale est supportée par une pluralité d'assemblage de suspension (7) espacées autour de la circonférence de chaque roue principale (1,2) afin d'agir entre l'intérieur d'une jante et le cockpit (3),
chaque assemblage de suspension comprend un ressort soutenant au moins une d'une roue au repos (15) ou une roue conductrice (16) afin d'absorber un choc appliqué à la roue principale (1,2) par le mouvement entre la roue principale (1,2) et le cockpit (3), le ressort étant un ressort à lames (14).

2. Un deux-roues d'après la revendication 1 où le cockpit comprend :
une pluralité de fixations espacées de façon circonférentielle comprenant des colliers ou
des blocs, et lesdits ressorts lames (14) sont sécurisés chacun auxdites fixations ;
un support (65) est sécurisé au cockpit et espacé de façon circonférentielle de la fixation,
et une butée amovible est montée sur le support (65) pour s'étendre entre le support et le ressort lame (14).

3. Un deux-roues d'après les revendications 1 et 2 où le ressort lames (14) comprend un ressort lame arqué (14) sécurisé pour que chaque extrémité libre de chaque ressort lame (14) s'étende substantiellement et de manière circonférentielle, chaque ressort lame (14) est monté de manière médiale au cockpit (3) et l'une ou chacune des roues au repos (15) ou en marche (16) est montée à chaque extrémité pour engager l'intérieur d'une jante de la roue principale (1,2).

4. Un deux-roues d'après toute revendication précédente où chaque roue au repos (15) est configurée pour engager les côtés de la jante de la roue et pas le haut de la jante et chaque roue directrice (16) engage la surface interne de la jante en face de l'axe et non les côtés, les côtés de la jante étant traités pour réduire la friction et le haut de la jante étant traité pour augmenter la traction avec la roue directrice (16).

5. Un deux-roues d'après toute revendication précédente où chaque roue directrice (1,2) est cambréé à une cambrure de moins de 90° à la norme à une sol plan.

6. Un deux-roues d'après toute revendication précédente ayant trois ou plus assemblages de suspension (7), où la majorité des assemblages de suspension (7) sont disposés sous un axe central au deux-roues et
chaque assemblage de suspension supportant une roue directrice est monté sous l'axe des roues principales.

7. Un deux-roues d'après toute revendication précédente où un moment de torsion est appliqué à chaque roue directrice (16) par un moteur électrique intégré dans chaque roue directrice
le moment de torsion contrôlé par un contrôleur digital d'après un algorithme sensible à un capteur d'attitude sensible à l'attitude du cockpit (3) pour maintenir le cockpit (3) à un angle de tangage sensiblement constant.

8. Un deux-roues d'après les revendications 1-6 où un moment de torsion est appliqué à chaque roue directrice (16) par un moteur électrique intégré dans chaque roue directrice le moment de torsion contrôlé par un contrôleur digital d'après un algorithme sensible à un détecteur d'attitude sensible à l'attitude du cockpit (3) pour maintenir le cockpit (3) à un angle de tangage sensiblement constant.

9. Un deux-roues d'après les revendications 6 et 7 ayant un système d'accumulation monté dans le cockpit (3) pour stocker et distribuer une charge électrique à un moteur électrique où le système d'accumulation comprend une batterie fixe (85) et une batterie amovible (78) où une batterie amovible déchargée (78) peut être rapidement enlevée pour chargement et remplacée par une batterie chargée.

10. Un deux-roues d'après la revendication 9 où le cockpit inclut un panneau canopée (51) supportant un étalage de panneaux solaires (50), ledit étalage de panneaux solaires (50) disposé pour délivrer une charge à au moins une de la batterie fixée ou amovible (85, 78).

11. Un deux-roues d'après toute revendication précédente où chaque jante de roue principale (1,2) comprend une section transverse ovalisée tubulaire avec une surface intérieure convexe et une surface extérieure concave où un pneu solide (6) est formé sur la surface extérieure concave de la jante.

12. Un deux-roues d'après toute revendication précédente où le cockpit (3) inclut au moins deux sièges (47, 48) pour accommoder un conducteur et un passager disposés de front ou de front décalés et où un espace à bagages (58) est formé dans le moulage sous chaque siège
un compartiment de stockage (60) est formé dans le moulage du sol localisé derrière chaque siège pour fournir un espace à bagages pour une valise et lesdits sièges sont déplaçables pour fournir un accès au compartiment de stockage derrière chaque siège.

13. Un deux-roues d'après toute revendication de 7-12 où un frein est associé à chaque roue directrice (16) pour appliquer un moment de frein à chaque roue principale (1,2) via la roue directrice (16), ledit frein comprenant un assemblage intégré avec la roue conductrice et assemblage moteur dans la jante.

14. Un deux-roues d'après la revendication 6 où un moment de torsion inégal est appliqué à chaque roue conductrice (16) en réponse à des signaux de contrôle du contrôleur digital émit en réponse au mouvement d'un joystick (52) depuis une position neutre dans le but de diriger le deux-roues loin d'un mouvement rectiligne.

15. Un deux-roues d'après la revendication 13 où un moment de frein peut être appliqué à chaque frein de roue conductrice (16) en réponse à l'opération d'un levier de frein (54) arrangé pour être opérable d'une seule main, soit de quantité égale ou inégale.

16. Un deux-roues d'après toute revendication précédente ayant un une roue jockey arrière (61) déployée pour être normalement engagé au sol et ainsi limiter le tangage vers l'arrière du cockpit (3)
le frein fourni dans la roue jockey arrière étant manuellement opérable depuis un contrôle fermable par loquet dans le cockpit pour décourager le mouvement du deux-roues.

17. Un deux-roues d'après toute revendication précédente ayant une roue jockey avant (62) montée sur un assemblage articulé répondant à un actionneur opérable manuellement à l'intérieur du cockpit (3) où la roue jockey avant (3) est élevée normalement et espacée au-dessus du sol et peut être abaissée et verrouillée pour engager le sol ; et un frein est fourni dans la roue jockey avant, ledit frein étant manuellement opérable depuis un contrôle verrouillable in the cockpit pour encourager le mouvement du deux-roues.

18. Un deux-roues d'après chaque revendication 6 à 15 ayant un système de propulsion manuel en plus de la propulsion du moteur électrique pour accroître chaque moteur électrique où une propulsion manuelle est fournie par des pédales disposées pour que cette poussée appliquée par le pied d'un conducteur ou passager à la pédale est transmise via un système manuel de transmission de propulsion pour appliquer un moment égal à chaque roue conductrice (16).

19. Un deux-roues d'après la revendication 18 où chaque pédale convertit une poussée linéaire en un moment via un assemblage pédalier ;
ledit assemblage pédalier est associé au moins au siège occupé par le conducteur et chacun desdits assemblages pédaliers inclut une pédale gauche et une pédale droite liées par des mécanismes de lien de pédales gauche et droit respectifs, à un arbre d'entraînement simple, où l'angle de phase entre le mécanisme lien de gauche et celui de droite n'est pas 0° ou 180° afin d'éviter que le lien s'arrête dans un état de verrouillage ou appliquant un moment inverse ;
un assemblage pédalier est associé avec chaque siège conducteur et passager du deux-roues ; chaque arbre d'entraînement peut s'appairer à un simple pignon dans le système de propulsion manuel;
le pignon avant transmet un moment à un différentiel de roue libre avant au moyen d'une boîte de vitesse opérable automatiquement, ledit différentiel appariant chacun de deux demi-assemblages de manches dans le système de propulsion manuel, où chaque roue conductrice est appariée dans le système de transmission manuel ;
chaque arbre d'entraînement de pédalier est couplé à une courroie poulie via une roue libre ;
chaque assemblage pédalier passager est découplé de la courroie poulie sauf si une poussée est appliquée aux pédales de l'assemblage pédalier conducteur.

20. Un deux-roues d'après la revendication 16 où un système de control répond à :
un moment appliqué aux pédales du conducteur, et
le joystick étant dans une position neutre
pour appliquer un moment de torsion pour stabiliser le tangage du cockpit et conduire le deux-roues dans une direction avant.

21. Un deux-roues d'après la revendication 20 où le système de contrôle répond à :
la vitesse du deux-roues étant détectée par un capteur comme étant substantiellement zéro et
le mouvement du joystick d'une position neutre à une position à gauche ou à droite de neutre
pour appliquer un moment égal et opposé des moteurs à chaque roue conductrice afin de tourner sur place.

22. Un deux-roues d'après une des revendications 20 ou 21 où le système de contrôle répond à un bouton pressé sur le joystick et tirant en arrière pour faire marche arrière.
